(19) Europäisches Patentamt
European Patent Office
Office européen des brevets

(11) **EP 4 336 959 A1**

(12) **DEMANDE DE BREVET EUROPEEN**

(43) Date de publication:
**13.03.2024 Bulletin 2024/11**

(21) Numéro de dépôt: **23195183.1**

(22) Date de dépôt: **04.09.2023**

(51) Classification Internationale des Brevets (IPC):
**H04W 84/18** (2009.01)

(52) Classification Coopérative des Brevets (CPC):
**H04W 84/18**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **08.09.2022 FR 2208972**

(71) Demandeur: **THALES**
**92400 Courbevoie (FR)**

(72) Inventeurs:
• **GIRARDEAU, Laurent**
**92622 GENNEVILLIERS CEDEX (FR)**
• **BROUET, Jérôme**
**92622 GENNEVILLIERS CEDEX (FR)**
• **SCHOLLER, Franck**
**92622 GENNEVILLIERS CEDEX (FR)**

(74) Mandataire: **Atout PI Laplace**
**Immeuble "Visium"**
**22, avenue Aristide Briand**
**94117 Arcueil Cedex (FR)**

(54) **SYSTÈME ET PROCÉDÉ DE COMMUNICATION SANS FIL CRITIQUE POUR LA SUPERVISION DES LIAISONS DE COMMUNICATION SANS FIL DIRECTE**

(57) Il est proposé un système de communication sans fil (10) comprenant un ensemble d'au moins deux dispositifs de communication (100). Chaque dispositif de communication (100-n) est associé à un identifiant unique et comprend un module de communication directe (1060). Le module de communication directe est configuré pour recevoir un ou plusieurs messages identifiés de communication directe transmis par un ou plusieurs autres dispositifs de communication (100-(n+1)) dudit ensemble (dits dispositifs émetteur). Un dispositif de communication (100-n) est configuré pour déterminer l'identifiant unique relatif à chaque dispositifs émetteurs à partir du message identifié reçu, pour déterminer un état de connectivité direct correspondant à un état de liaison de communication sans fil directe de chacun des dispositifs émetteur avec le dispositif de communication et pour déterminer une matrice de connectivité élémentaire comprenant l'état de connectivité direct associé à l'identifiant unique de chaque dispositif émetteur.

Figure 2

EP 4 336 959 A1

## Description

### Domaine technique

La présente invention concerne de manière générale le domaine des communications sans fil, et en particulier un système et un procédé de communication par redondance.

Dans les systèmes de communication sans fil dite « critique », utilisés par exemple pour des missions civiles ou militaires, il est connu d'utiliser des dispositifs de communication sans fil pouvant fonctionner selon des protocoles de communication en mode relayé, c'est-à-dire avec connexion à une infrastructure réseau, ou en mode direct (c'est-à-dire sans infrastructure réseau). Par exemple, la norme TETRA (*TErrestrial Trunked RAdio* selon l'expression anglo-saxonne correspondante), établie par l'organisme de normalisation ETSI (*European Telecommunications Standards Institute* selon l'expression anglo-saxonne correspondante), porte sur un protocole de communication radio numérique mobile bidirectionnel destiné aux services publiques tels que les services de secours, les forces de polices, les ambulances, les pompiers, les services de transport public et l'armée.

Certains systèmes de communication sans fil critique connus utilisent des dispositifs de communication comprenant un terminal dual intégrant un terminal cellulaire type 4G (mode relayé) avec un terminal radio souvent analogique (mode direct). Cependant, dans de telles solutions, une rupture de communication d'un utilisateur par rapport au reste du groupe de communication sans fil est fréquente, entrainant des pertes de transmission parfois critiques. En effet, un besoin fondamental de tels services publiques est de pouvoir communiquer en toute circonstance (sous et hors couverture réseau), par exemple pour coordonner efficacement leurs actions avec l'ensemble des membres de leur groupe de communication, ou pour transmettre un signal de détresse à au moins un membre de leur groupe de communication ou à d'autres personnes à proximité susceptibles de leur venir en aide.

En communication de groupe, chaque terminal dual peut être sous la couverture d'une infrastructure ou non, à portée d'un autre terminal dual en mode direct ou non. La situation changeant constamment en fonction de la mobilité des utilisateurs des terminaux. Les dispositifs doivent toujours pouvoir communiquer entre eux.

Aujourd'hui, il n'existe aucune solution efficace permettant de répondre aux problèmes de discontinuité de communication entre des dispositifs de communication sans fil critique, disposés sous la couverture d'une infrastructure et/ou de zones non couvertes par cette infrastructure.

Il existe ainsi un besoin pour un système (comprenant des dispositifs) et un procédé capable d'améliorer la gestion de ces communications sans fil et en particulier pour la supervision des liaisons selon le mode direct entre dispositifs.

### Résumé de l'invention

La présente invention vient améliorer la situation en proposant un système de communication sans fil critique comprenant un ensemble d'au moins deux dispositifs de communication. Chaque dispositif de communication est associé à un identifiant unique $i_{(n)}$ et comprend un module de communication directe fonctionnant selon un protocole de communication directe et une horloge interne, le module de communication directe d'un dispositif de communication étant configuré pour recevoir un ou plusieurs messages identifiés de communication directe $\mathcal{M}_{d(n+1)}$ transmis par un ou plusieurs autres dispositifs de communication de l'ensemble de dispositifs de communication, dits dispositifs émetteur. Un dispositif de communication est configuré pour déterminer l'identifiant unique $i_{(n+1)}$ relatif à chacun des dispositifs émetteurs à partir du message identifié de communication directe $\mathcal{M}_{d(n+1)}$ reçu, et pour déterminer un état de connectivité direct $\varepsilon_{d(n\leftrightarrow n+1)}$ correspondant à un état de liaison de communication sans fil directe de chacun des dispositifs émetteur avec le dispositif de communication. Le dispositif de communication est configuré pour déterminer une matrice de connectivité élémentaire $\mathcal{T}_{(n)}$ comprenant l'état de connectivité direct $\varepsilon_{d(n\leftrightarrow n+1)}$ associé à l'identifiant unique $i_{(n+1)}$ de chaque dispositif émetteur, l'état de connectivité direct $\varepsilon_{d(n\leftrightarrow n+1)}$ étant mis à jour en l'absence de la réception d'un message identifié de communication directe $\mathcal{M}_{d(n+1)}$ émis par le dispositif à un instant t déterminé par l'horloge interne et défini par rapport à un seuil de surveillance de communication $\tau_c$.

Le système peut comprendre en outre une infrastructure réseau configurée pour mettre en oeuvre un réseau d'interconnexion. Chaque dispositif de communication peut comprendre un module de communication relayée fonctionnant selon un protocole de communication relayée, c'est-à-dire avec connexion à une infrastructure réseau via le réseau d'interconnexion. Chaque dispositif de communication peut être configuré pour déterminer un message de connectivité relayée $\mathcal{M}_{\mathcal{T}(n)}$ comprenant la matrice de connectivité élémentaire $\mathcal{T}_{(n)}$. Le module de communication relayée de chaque dispositif de communication peut être configuré pour émettre le message de connectivité relayée $\mathcal{M}_{\mathcal{T}(n)}$ si le dispositif de communication est connecté au réseau d'interconnexion, en fonction de paramètres de répétition prédéfinis.

Le système peut comprendre en outre un centre de communication relié au réseau d'interconnexion et au moins un équipement de supervision, l'équipement de supervision étant le centre de communication et/ou un dispositif de communication du système connecté au réseau d'interconnexion. L'équipement de supervision peut être configuré pour recevoir au travers du réseau d'interconnexion le message de connectivité relayé $\mathcal{M}_{\mathcal{T}(n)}$ envoyé par chacun des dispositifs de communication connectés au réseau d'interconnexion. L'équipement de supervision peut être en outre configuré pour déterminer une matrice de connectivité globale T mise à jour à partir des matrices de connectivité élémentaires $\mathcal{T}_{(n)}$ comprises dans les messages de connectivité relayés $\mathcal{M}_{\mathcal{T}(n)}$ reçus par l'équipement de supervision.

L'équipement de supervision peut être dispositif de communication et peut être configuré pour déterminer une liste de contrôle comprenant au moins un dispositif de communication du système. L'équipement de supervision peut être en outre configuré pour déterminer un message de supervision $\mathcal{M}_{(400)}$, les dispositifs de communication de la liste de contrôle étant non connectés au réseau d'interconnexion, la liste de contrôle étant déterminée à partir de la matrice de connectivité globale $\mathcal{T}$. Le module de communication directe de l'équipement de supervision peut être configuré pour émettre le message de supervision $\mathcal{M}_{(400)}$ de manière répétée selon une fréquence de temps de supervision $\tau_s$ prédéfinie.

La liste de contrôle et le message de supervision $\mathcal{M}_{(400)}$ peuvent être mis à jour si l'équipement de supervision reçoit un message identifié de communication directe $\mathcal{M}_{d(h)}$ en provenance d'un des dispositifs de communication de la liste de contrôle et/ou si l'état de connectivité relayée $\varepsilon_{r(h)}$ d'un des dispositifs de communication dans la matrice de connectivité globale $\mathcal{T}$ est modifié.

Dans des modes de réalisation, la liste de contrôle peut comprendre $\mathcal{H}$ dispositifs de communication. Le message de supervision $\mathcal{M}_{(400)}$ peut être déterminé à partir de l'identifiant unique $i_{(h)}$ de chacun des $\mathcal{H}$ dispositifs de communication de la liste de contrôle, chaque identifiant unique $i_{(h)}$ étant associé dans le message de supervision $\mathcal{M}_{(400)}$ à un indice de réponse h compris entre 1 et $\mathcal{H}$.

Chaque dispositif de communication peut comprendre une horloge de supervision et peut être configuré pour activer un mode de supervision individuelle, en réponse à la déconnexion du dispositif de communication du réseau d'interconnexion. Le dispositif de communication peut être configuré pour effectuer, en réponse à l'activation du mode de supervision individuelle, une première initialisation de l'horloge de supervision à 0 et un déclenchement d'une alerte de la perte du réseau d'interconnexion, puis :

**[0014]** - une réinitialisation de l'horloge de supervision à 0, si le module de communication directe du dispositif de communication reçoit un message identifié de communication directe $\mathcal{M}_{d(n+1)}$ en provenance d'un autre dispositif de l'ensemble d'au moins deux dispositifs de communication,

**[0015]** - un déclenchement d'une alerte de perte de toutes connexions, pendant le mode de supervision individuelle si l'horloge de supervision dépasse un seuil de temps de supervision $\tau_h$ prédéfini, tel que $\tau \geq \tau_h$.

Dans certains modes de réalisation, chaque dispositif de communication peut comprendre une horloge de supervision et peut être configuré pour activer un mode de supervision individuelle, en réponse à la déconnexion du dispositif de communication du réseau d'interconnexion, le dispositif de communication étant configuré pour effectuer, en réponse à l'activation du mode de supervision individuelle une initialisation de l'horloge de supervision à 0, si le module de communication directe du dispositif de communication reçoit un message de supervision $\mathcal{M}_{(400)}$ transmis par l'équipement de supervision, le module de communication directe du dispositif de communication étant configuré pour émettre un message réponse en communication directe $\mathcal{M}_{s(n)}$ en réponse au message de supervision $\mathcal{M}_{(400)}$ reçu.

Le dispositif de communication peut être configuré pour déterminer l'indice de réponse h associé à l'identifiant unique $i_{(n)}$ du dispositif de communication à partir du message de supervision $\mathcal{M}_{(400)}$, le dispositif de communication étant configuré pour transmettre le message réponse en communication directe $\mathcal{M}_{s(n)}$ à émettre au module de communication directe après une durée de contrôle $t_c$ défini à partir d'une durée initiale

$\tau_i$ donnée, la durée de contrôle $t_c$ étant définie par $t_c = (h - 1) \times \tau_i$.

Chaque dispositif de communication peut comprendre une unité de géolocalisation fournissant des données de géolocalisation du dispositif de communication. Le message réponse en communication directe $\mathcal{M}_{s(n)}$ peut comprendre au moins une partie au moins des données de géolocalisation du dispositif de communication.

L'invention fournit également un procédé de gestion de communication sans fil critique, mis en oeuvre dans un système comprenant un ensemble d'au moins deux dispositifs de communication et une infrastructure réseau configurée pour mettre en oeuvre un réseau d'interconnexion, chaque dispositif de communication est associé à un identifiant unique i(n) et comprend un module de communication directe fonctionnant selon un protocole de communication directe, une horloge interne et un module de communication relayée fonctionnant selon un protocole de communication relayée, c'est-à-dire avec connexion à une infrastructure réseau via le réseau d'interconnexion. Le procédé comprend les étapes consistant à :

- recevoir via le module de communication directe d'un dispositif de communication un message identifié de communication directe $\mathcal{M}_{d(n+1)}$ transmis par un autre dispositif de communication de l'ensemble de dispositifs de communication, dit dispositif émetteur,

- déterminer l'identifiant unique $i(n+1)$ relatif au dispositif émetteur à partir du message identifié de communication directe $\mathcal{M}_{d(n+1)}$ reçu,

- déterminer un état de connectivité direct $\varepsilon_{d(n\leftrightarrow n+1)}$ correspondant à un état de liaison de communication sans fil directe du dispositif émetteur avec le dispositif de communication,

- déterminer une matrice de connectivité élémentaire $\mathcal{T}_{(n)}$ à partir de l'état de connectivité direct $\varepsilon_{d(n\leftrightarrow n+1)}$ associé à l'identifiant unique $i(n+1)$ de chaque dispositif émetteur,

- déterminer un message de connectivité relayée $\mathcal{M}_{\mathcal{T}(n)}$ comprenant la matrice de connectivité élémentaire $\mathcal{T}_{(n)}$, et

- émettre le message de connectivité relayée $\mathcal{M}_{\mathcal{T}(n)}$ si le dispositif de communication est connecté au réseau d'interconnexion,

Le procédé comprend en outre les étapes consistant à :

- mettre à jour l'état de connectivité direct $\varepsilon_{d(n\leftrightarrow n+1)}$ en l'absence de la réception d'un message identifié de communication directe $\mathcal{M}_{d(n+1)}$ émis par le dispositif à un instant t déterminé par l'horloge interne et défini par rapport à un seuil de surveillance de communication $\tau_c$,

- déterminer une matrice de connectivité globale $\mathcal{T}$ de l'ensemble d'au moins deux dispositifs de communication à partir de la matrice de connectivité élémentaire $\mathcal{T}_{(n)}$ de chaque dispositif de communication de l'ensemble,

- déterminer à partir de la matrice de connectivité globale $\mathcal{T}$ une liste de contrôle comprenant au moins un dispositif de communication du système, les dispositifs de communication de la liste de contrôle étant non connectés au réseau d'interconnexion,

- déterminer un message de supervision $\mathcal{M}_{(400)}$ à partir de la liste de contrôle, émettre le message de supervision $\mathcal{M}_{(400)}$ de manière répété selon une fréquence de temps de supervision $\tau_s$ prédéfinie.

Le système et le procédé de gestion de communication sans fil critiques selon les modes de réalisation de l'invention permettent d'améliorer la communication entre des dispositifs de communication sans fil critiques disposés sous la couverture d'une infrastructure et/ou de zones non couvertes par cette infrastructure.

Ils permettent de générer une solution abordable, en termes de mise en oeuvre et de prix, pour effectuer le maintien des communications entre des dispositifs de communication sans fil critiques sur une couverture surfacique supérieure à 99% du territoire et notamment une couverture nationale native.

Ils permettent également de générer une solution abordable, en termes de mise en oeuvre et de prix, pour effectuer le maintien des communications entre des dispositifs de communication sans fil critiques hors couverture réseau sur plusieurs centaines de mètres.

**Description des figures**

D'autres caractéristiques, détails et avantages de l'invention ressortiront à la lecture de la description faite en référence aux dessins annexés donnés à titre d'exemple.

[Fig.1] La figure 1 est un schéma représentant un système de communication, selon des modes de réalisation de l'invention.

[Fig.2] La figure 2 est un schéma représentant deux modes de communication sans fil entre deux dispositifs de communication sans fil critique, selon des modes de réalisation de l'invention.

[Fig.3] La figure 3 est un schéma représentant un dispositif de communication sans fil critique, selon des modes de réalisation de l'invention.

[Fig.4] La figure 4 illustre un exemple d'une matrice de connectivité élémentaire d'un dispositif de communication sans fil critique, selon des modes de réalisation de l'invention.

[Fig.5] La figure 5 illustre un exemple d'une matrice de connectivité globale d'un équipement de supervision, selon des modes de réalisation de l'invention.

[Fig.6] La figure 6 illustre un exemple d'un message de supervision déterminé par un équipement de supervision, selon des modes de réalisation de l'invention.

[Fig.7] La figure 7 est un organigramme représentant les étapes du procédé de gestion de communication sans fil critique pour l'émission de messages, selon des modes de réalisation de l'invention.

[Fig.8] La figure 8 est un organigramme représentant les étapes du procédé de gestion de communication sans fil critique pour la réception de messages, selon des modes de réalisation de l'invention.

[Fig.9] La figure 9 est un organigramme représentant les étapes du procédé de gestion de communication sans fil critique pour la supervision des liaisons de communication sans fil direct d'un dispositif de communication sans fil critique, selon des modes de réalisation de l'invention.

[Fig.10] La figure 10 est un organigramme représentant les étapes du procédé de gestion de communication sans fil critique pour la supervision des liaisons de communication sans fil direct entre dispositifs de communication sans fil critique, selon des modes de réalisation de l'invention.

[Fig.11] La figure 11 est un organigramme représentant des sous-étapes du procédé de gestion de communication sans fil critique pour la supervision des liaisons de communication sans fil direct entre dispositifs, selon des modes de réalisation de l'invention.

[Fig.12] La figure 12 est un organigramme représentant des sous-étapes du procédé de gestion de communication sans fil critique pour la supervision des liaisons de communication sans fil direct d'un dispositif de communication sans fil critique, selon des modes de réalisation de l'invention.

[Fig.13] La figure 13 est un organigramme représentant des sous-étapes du procédé de gestion de communication sans fil critique pour la réception de messages, selon des modes de réalisation de l'invention.

Des références identiques sont utilisées dans les figures pour désigner des éléments identiques ou analogues. Pour des raisons de clarté, les éléments représentés ne sont pas à l'échelle.

**Description détaillée**

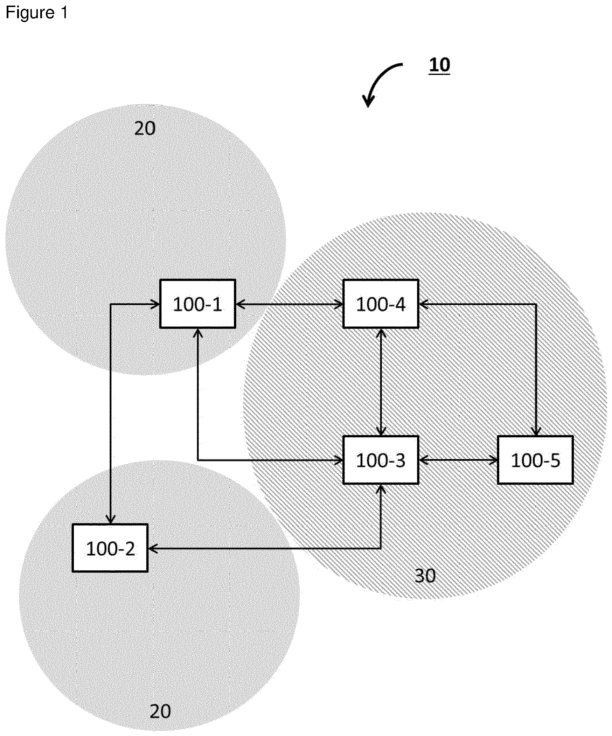

La figure 1 représente schématiquement un système de communication sans fil critique 10 comprenant un ensemble de dispositifs de communication 100-1, 100-2, 100-3, 100-4 et 100-5, selon des modes de réalisation de l'invention.

Le système de communication sans fil critique 10 est utilisé dans le domaine des communications sans fil critiques, par des utilisateurs, dans des situations critiques, par exemple dans des situations liées à la sécurité publique, dans le domaine militaire ou des situations d'urgence. Par exemple et sans limitation, les utilisateurs peuvent être, selon le cas d'usage, des forces de secours ou des forces de sécurité, des ambulanciers, etc.

Un dispositif de communication sans fil critique 100-n (ou dispositif de communication) désigne un équipement utilisateur utilisé par un utilisateur final U-n, pour communiquer avec au moins un autre utilisateur U-(n+1) disposant d'un dispositif de communication 100-(n+1) dans le système de communication sans fil critique 10. L'indice 'n' est associé à différents utilisateurs finaux.

Chaque dispositif de communication 100-n du système de communication sans fil critique 10 est configuré pour communiquer avec au moins un autre dispositif de communication 100-(n+1) du système de communication sans fil critique 10, selon au moins un mode de communication sans fil.

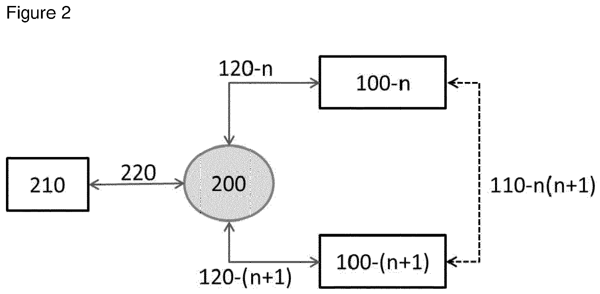

La figure 2 représente schématiquement deux modes de communication sans fil entre deux dispositifs de communication 100-n et 100-(n+1), selon des modes de réalisation de l'invention.

Le premier mode de communication sans fil entre les deux dispositifs de communication 100-n et 100-(n+1) peut être un « mode de communication directe » mis en oeuvre selon un « protocole de communication directe » (c'est-à-dire sans infrastructure réseau). En particulier, un protocole de communication directe peut être par exemple une transmission de radiocommunications définie selon la norme de radio numérique mobile DMR (*Digital Mobile Radio* selon l'expression anglo-saxonne correspondante) établie par l'organisme de normalisation ETSI (*European Telecommunications Standards Institute* selon l'expression anglo-saxonne correspondante).

Dans l'exemple de réalisation représenté sur la figure 2, le dispositif de communication 100-n et le dispositif de communication 100-(n+1) sont connectés entre eux au moyen d'une liaison de communication sans fil directe 110-n(n+1). En outre, pour que la liaison de communication sans fil directe 110-n(n+1) soit effective, les dispositifs 100-n et 100-(n+1) doivent être à portée radio directe.

Le deuxième mode de communication sans fil entre les deux dispositifs de communication 100-n et 100-(n+1) peut être un « mode de communication 'relayée' » mis en oeuvre selon un « protocole de communication 'relayée' » (c'est-à-dire avec connexion à une infrastructure réseau). En particulier, un protocole de communication relayée peut être une transmission de radiocommunications sans fil, par exemple et sans limitation, définie selon la norme de téléphonie mobile LTE (*Long Term Evolution* selon l'expression anglo-saxonne correspondante) et établie par l'organisme de normalisation 3GPP (*3rd Génération Partnership Project* selon l'expression anglo-saxonne correspondante), ou selon une norme de communication postérieure au LTE par exemple associée à la cinquième génération de technologie réseau mobile (5G).

Le système de communication sans fil critique 10 peut comprendre une infrastructure réseau configurée pour la mise en oeuvre d'un réseau d'interconnexion 200. Dans un mode de réalisation, l'infrastructure réseau peut comprendre une architecture centralisée ou distribuée en une pluralité de sites radio (non représentés sur les figures) interconnectés via un réseau d'interconnexion 200 (représenté schématiquement sur la figure 2). Dans un tel mode de réalisation, les sites radio peuvent être par exemple des sites radio mobiles, déployés via une infrastructure véhiculaire mobile. Dans un tel système, un dispositif de communication 100-n correspond à un terminal mobile (ou téléphonique), encore appelé équipement utilisateur UE (acronyme de *'user equipment'*), propre à être connecté au réseau d'interconnexion 200 via un ou plusieurs sites radio.

Dans l'exemple de réalisation représenté sur la figure 2, le dispositif de communication 100-n et le dispositif de communication 100-(n+1) sont connectés au réseau d'interconnexion 200 (et par conséquent entre eux) respectivement par une liaison de communication sans fil relayée 120-n et la transmission (ou liaison) sans fil relayée 120-(n+1).

Selon certains modes de réalisation, le système de communication sans fil critique 10 peut comprendre un centre de communication 210 connecté au réseau d'interconnexion 200 (et donc aux dispositifs de communication 100-n connectés au réseau d'interconnexion 200) par une transmission sans fil 220 (dite 'transmission sans fil centrale'). Par exemple et sans limitation, un centre de communication 210 peut être un centre de commandement et/ou un centre de gestion de données.

Chaque dispositif de communication 100-n du système de communication sans fil critique 10 est disposé dans une zone géographique pouvant comprendre une ou plusieurs zones géographiques avec couverture du réseau d'interconnexion 200, appelées zones avec couverture 20, et au moins une zone géographique sans couverture (ou hors couverture) du réseau d'interconnexion 200, appelées zones hors couverture 30. Dans l'exemple de réalisation représenté sur la figure 1, les dispositifs de communication 100-1 et 100-2 sont disposés dans des zones avec couverture 20, alors que les dispositifs de communication 100-3, 100-4 et 100-5 sont disposés dans une zone sans couverture 30. Les dispositifs de communication 100-1 et 100-2 sont alors « en ligne » ou « en réseau », tandis que les dispositifs de communication 100-3, 100-4 et 100-5 sont « hors ligne » ou « hors réseau » et ne peuvent pas communiquer entre eux ou avec les dispositifs de communication 100-1 et 100-2, selon le mode de communication relayée.

De manière générale, deux dispositifs de communication 100-n et 100-(n+1) « en ligne » peuvent communiquer entre eux selon le mode de communication relayée. Deux dispositifs de communication 100-n et 100-(n+1) « en ligne » peuvent en outre communiquer entre eux selon le mode de communication directe s'ils sont à portée radio directe. Si l'un ou les deux dispositifs de communication 100-n et 100-(n+1) sont « hors ligne », les deux dispositifs ne peuvent pas communiquer entre eux selon le mode de communication relayée, et peuvent communiquer entre eux selon le mode de communication directe s'ils sont à portée radio directe.

Chaque dispositif de communication 100-n du système de communication sans fil critique 10 est configuré pour être capable :

- d'émettre un même message de façon synchrone à la fois au travers du mode de communication relayée et au travers du mode de communication directe ; et

- de recevoir des messages émis (ou transmis) au travers du mode de communication relayée et/ou au travers du mode de communication directe par un ou plusieurs autres dispositifs de communication 100-(n+1) de l'ensemble de dispositifs de communication. Ces autres dispositifs de communication 100-(n+1) sont encore appelés 'dispositifs émetteur'.

Tel qu'utilisé ici, le terme 'message', en émission, peut désigner un ensemble de données associé à une ou plusieurs informations à transmettre par un utilisateur U-n disposant d'un dispositif de communication 100-n, à destination d'un ou plusieurs autres utilisateurs U-(n+1) disposant d'un dispositif de communication 100-(n+1) ayant des fonctions similaires ou équivalentes aux fonctions du dispositif de communication 100-n. Similairement, le terme 'message', en réception, fait référence à un ensemble de données associé à une ou plusieurs informations reçues par un utilisateur U-n disposant d'un dispositif de communication 100-n, et provenant d'un autre utilisateur U-(n+1) disposant d'un dispositif de communication 100-(n+1). Par exemple et sans limitation, un message peut être un signal acoustique (i.e. un message vocal ou audio, un message sonore, etc.) et/ou un signal visuel (i.e. une ou plusieurs images, un message texte, etc.).

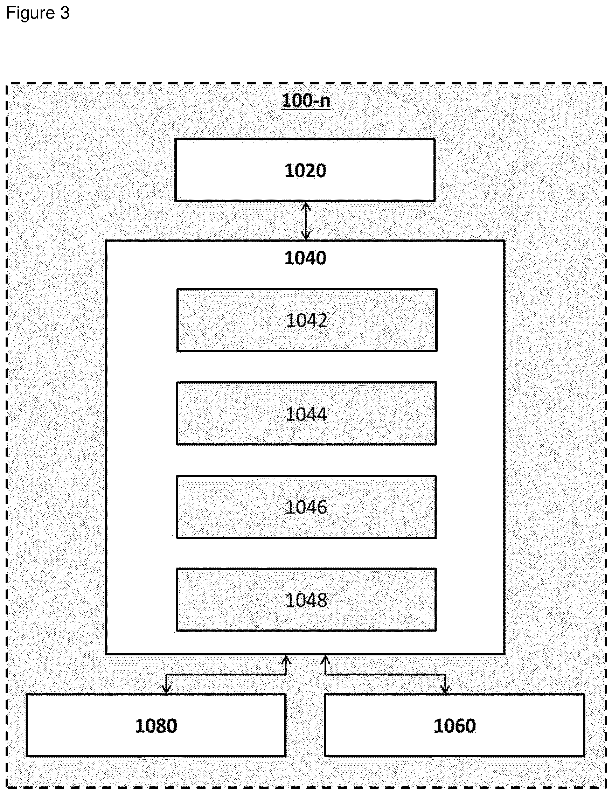

La figure 3 représente schématiquement un dispositif de communication 100-n comprenant un module d'acquisition et de transmission de message 1020, un module de gestion 1040, un module de communication directe 1060 et un module de communication relayée 1080, selon des modes de réalisation de l'invention.

Le module d'acquisition et de transmission de message 1020 peut comprendre une ou plusieurs interfaces homme-machine. Ces interfaces homme-machine peuvent comprendre un ou plusieurs moyens d'acquisition de message configurés pour acquérir un message $\mathcal{M}_{0(n)}$ (appelé aussi un message initial $\mathcal{M}_{0(n)}$) généré par un utilisateur U-n, par le dispositif de communication 100-n. Ces interfaces homme-machine peuvent comprendre également un ou plusieurs moyens de transmission de messages $\mathcal{M}_{t(n+1)}$, reçus par le dispositif de communication 100-n, à l'utilisateur U-n, ces messages $\mathcal{M}_{t(n+1)}$ ayant été précédemment générés par des utilisateurs U-(n+1) et émis par ces derniers à destination de l'utilisateur U-n. Par exemple et sans limitation, le module d'acquisition et de transmission de message 1020 peut comprendre un microphone, un haut-parleur, un clavier, un écran d'affichage et/ou une ou plusieurs unités optoélectroniques capables d'émettre de la lumière telles que des diodes électroluminescentes.

Le module de communication directe 1060 du dispositif de communication 100-n est configuré pour émettre et recevoir un ou des messages au travers de la liaison de communication sans fil directe 110-n(n+1). Par exemple et sans limitation, le module de communication directe 1060 peut comprendre une unité matérielle telle qu'une carte électronique appelée 'module DMR' par exemple.

Dans des modes de réalisation, le module de communication directe 1060 peut en outre être configuré pour sécuriser par cryptage les messages à émettre selon une 'clé de cryptage des communications directes', par exemple commune aux dispositifs de communication du système de communication sans fil critique 10. Par conséquent, le module de communication directe 1060 peut en outre être configuré pour décrypter les messages reçus selon la clé de cryptage commune des communications directes.

Le module de communication relayée 1080 du dispositif de communication 100-n est configuré pour émettre et/ou recevoir un ou des messages au moyen de la transmission sans fil relayée 120-n du réseau d'interconnexion 200. Par exemple et sans limitation, le module de communication relayée 1080 peut être un terminal téléphonique (i.e. équipement utilisateur ou UE), propre à être connecté au réseau d'interconnexion 200 via un ou plusieurs sites radio. Le module de communication relayée 1080 peut comprendre une application dédiée aux communications de missions critiques, ou communications de groupe, encore appelée application MCX (*Mission-Critical Services* en langue anglo-saxonne). Dans un tel mode de réalisation, selon le protocole de communication relayée, le module de communication relayée 1080 des dispositifs du système 10 peut comprendre un client MCX tandis que le centre de communication 210 comprend un serveur MCX.

Le module de communication relayée 1080 du dispositif de communication 100-n est associé à un identifiant unique noté $i_{r(n)}$, identifiant le dispositif de communication 100-n.

Le module de communication relayée 1080 du dispositif de communication 100-n est en outre associé à un état de connectivité relayée $\varepsilon_{r(n)}$ correspondant à un état de connexion du dispositif de communication 100-n avec le réseau d'interconnexion 200.

Dans des modes de réalisation, le module de communication relayée 1080 du dispositif de communication 100-n peut alors être configuré pour générer (c'est à dire déterminer et mettre à jour) une structure de donnée, également appelée 'matrice de connectivité relayée' notée $\mathcal{T}_{r(n)}$, comprenant l'état de connectivité relayée $\varepsilon_{r(n)}$ du dispositif de communication 100-n et les états de connectivité relayée $\varepsilon_{r(n+1)}$ de chacun des autres dispositifs de communication 100-(n+1) de l'ensemble des dispositifs de communication du système 10 en fonction des identifiants uniques $i_{r(n)}$ et $i_{r(n+1)}$.

Dans certains modes de réalisation, le centre de communication 210 peut alors être configuré pour superviser la connexion de chacun des dispositifs de communication 100-n avec le réseau d'interconnexion 200, via leur module 1080 respectif, et pour générer (c'est à dire déterminer et mettre à jour) une structure de donnée telle qu'une 'matrice de connectivité relayée globale' notée $\mathcal{T}_r$, comprenant l'état de connectivité relayée $\varepsilon_{r(n)}$ de chacun des dispositifs de communication (100-n et 100-(n+1)) de l'ensemble des dispositifs de communication du système 10 en fonction de leurs identifiants uniques $i_{r(n)}$. Le centre de communication 210 peut alors être configuré pour transmettre une partie ou l'ensemble des informations de la matrice de connectivité relayée globale $\mathcal{T}_r$ aux dispositifs de communication 100-n via le réseau d'interconnexion 200 et donc leur module 1080 respectif.

La matrice de connectivité relayée $\mathcal{T}_{r(n)}$ peut être initialisée lorsque tous les dispositifs du système 10 sont « en ligne » dans un mode opérationnel. Tel qu'utilisé ici, un dispositif « en ligne » fait référence à un dispositif connecté au réseau 200. L'initialisation de la matrice de connectivité peut être mise en oeuvre au début d'une mission ou d'une intervention spécifique menée par les utilisateurs du système 10. La matrice de connectivité relayée $\mathcal{T}_{r(n)}$ peut ensuite être mise à jour, selon une fréquence prédéfinie, par le module de communication relayée 1080, lorsque le dispositif est connecté au réseau 200. Une matrice de connectivité relayée globale notée $\mathcal{T}_r$ comprend l'état de connectivité relayée $\varepsilon_{r(n)}$ précis à tout instant $t$ de l'ensemble des dispositifs du système. La matrice de connectivité relayée $\mathcal{T}_{r(n)}$ d'un dispositif « hors ligne » peut en revanche être erronée. La matrice de connectivité relayée $\mathcal{T}_r$ peut être déterminée et maintenue par le centre de communication 210 par exemple.

Un état de connectivité relayée $\varepsilon_{r(n)}$ peut comprendre par exemple et sans limitation un entier et/ou un élément booléen. En particulier, l'entier peut être de type binaire. Ainsi, l'état de connectivité relayée $\varepsilon_{r(n)}$ peut prendre une valeur binaire parmi une première valeur et une deuxième valeur. L'état de connectivité relayée $\varepsilon_{r(n)}$ peut prendre la première valeur, par exemple égale à '1' (ou 'vrai') si le dispositif 100-n est connecté au réseau 200, ou la deuxième valeur, par exemple égale à '0' (ou 'faux'), si le dispositif 100-n est déconnecté du réseau 200. Une matrice de connectivité relayée $\mathcal{T}_r$ (ou $\mathcal{T}_{r(n)}$) peut être représentée par une structure de donnée, telle qu'une table de données, comprenant les informations relatives à l'état du mode de communication relayée (i.e. portée du réseau) d'une partie ou de l'ensemble des dispositifs de communication compris dans le système 10 en fonction de leur identifiant unique $i_{r(n)}$. Un état de connectivité relayée $\varepsilon_{r(n)}$ peut également comprendre une date relative à un horodatage correspondant au dernier « constat » de connectivité du dispositif 100-n au réseau d'interconnexion 200.

Dans des modes de réalisation, le module de communication relayée 1080 peut en outre être configuré pour sécuriser par cryptage les messages à émettre selon une clé de cryptage des communications relayées, qui peut, par exemple, être commune aux dispositifs de communication du système de communication sans fil critique 10. Le module de communication relayée 1080 peut alors être configuré pour décrypter les messages reçus selon la clé de cryptage commune des communications relayées.

Le centre de communication 210 peut générer via le réseau 200 le partage de clés de cryptage des communications relayées parmi l'ensemble des modules de communication relayée 1080 des dispositifs du système de communication sans fil critiques 10, lorsque ces dispositifs sont tous « en ligne » (i.e. connecté au réseau 200) dans un mode opérationnel. Un tel partage de clés peut être mis en oeuvre au début d'une mission ou d'une intervention spécifique mené par les utilisateurs du système 10.

Le module d'acquisition et de transmission de message 1020, ainsi que le module de communication directe 1060 et le module de communication relayée 1080 peuvent chacun être connecté au module de gestion 1040. Le module de gestion 1040 est alors configuré pour collecter et traiter les messages à émettre provenant du module 1020 (acquis de l'utilisateur U-n) et pour les transférer vers les deux modules de communication 1060 et 1080. Le module de gestion 1040 est en outre configuré pour collecter et traiter des messages reçus provenant des deux modules de communication 1060 et 1080 et les transférer vers le module 1020 (à transmettre à l'utilisateur U-n).

Selon certains modes de réalisation, le centre de communication 210 peut générer via le réseau 200 le partage de clés de cryptage des communications directes auprès de l'ensemble des dispositifs du système de communication sans fil critique 10, lorsque ceux-ci sont tous « en ligne ». Avantageusement, ce partage de clés peut être mis en oeuvre au début d'une mission ou d'une intervention spécifique menée par les utilisateurs du système 10. Pour cela, le centre de communication 210 peut être configuré pour transmettre une clé de cryptage des communications directes au module de communication relayée 1080 des différents dispositifs. Le module de gestion 1040 (relié au module de communication relayée 1080) peut alors être configuré pour transmettre cette clé de cryptage des communications directes au module de communication directe 1060, permettant un renouvellement rapide (par exemple, à chaque mission et/ou intervention) des clés dans ce mode de communication spécifique.

Selon certains modes de réalisation, le module d'acquisition et de transmission de message 1020 peut être un dispositif émetteur-récepteur portatif ou émetteur-récepteur bidirectionnel portatif. Par exemple, le module d'acquisition et de transmission de message 1020 peut être un 'micro-poire' comprenant des moyens d'acquisition et de transmission de messages vocaux, tels que par exemple un micro, un haut-parleur et/ou des boutons de prises d'alternat. Ce micro-poire peut également présenter un écran permettant la lecture des messages texte reçus. Le module d'acquisition et de transmission de message 1020 peut par exemple être un smartphone configuré pour la saisie et/ou la lecture de messages de type texte ou audio, pour la saisie et/ou la consultation de positions de géolocalisation, l'acquisition et/ou la visualisation d'images.

Selon des modes de réalisation, les modules 1020, 1080 et 1060 peuvent être intégrés dans un même élément. Dans d'autres modes de réalisation, les modules 1020, 1080 et/ou 1060 peuvent comprendre des connectiques permettant d'échanger entre eux et/ou avec d'autres modules externes.

Dans des modes de réalisation, le module de module de gestion 1040 peut comprendre une unité matérielle (comme une carte électronique par exemple) s'interfaçant au module de communication directe 1060 et au module de communication relayée 1080. Le module de gestion 1040 peut en outre comprendre une unité logicielle et/ou micro-logicielle (i.e. logiciel embarqué) implémentée ou intégrée au module de communication directe 1060, au module de communication relayée 1080 et/ou au module d'acquisition et de transmission de message 1020.

La figure 3 représente une structure du module de gestion 1040, selon des modes de réalisation de l'invention.

Dans certains modes de réalisation, le module de gestion 1040 comprend une unité de traitement de message 1042 et une unité d'identification 1044.

L'unité logicielle et/ou micro-logicielle du module de gestion 1040 peut comprendre l'unité de traitement de message 1042 et l'unité d'identification 1044.

L'unité de traitement de message 1042 est configurée pour convertir un message $\mathcal{M}_{0(n)}$, acquis via le module d'acquisition de message 1020, en un message de communication directe $\mathcal{M}_d$ en fonction du protocole de communication directe associé au module de communication directe 1060. L'unité de traitement de message 1042 est configurée pour convertir le même message $\mathcal{M}_{0(n)}$ en un message de communication relayée $\mathcal{M}_r$ en fonction du protocole de communication relayée associé au module de communication relayée 1080.

En particulier, un message émis par un module de communication relayée 1080 au sein du réseau d'interconnexion 200 comprend une donnée d'identification associée à l'identifiant unique $i_{r(n)}$ de ce module de communication relayée 1080. L'identifiant unique $i_{r(n)}$ peut alors être reconnu par n'importe quel module de communication relayée 1080 et/ou module de gestion 1040 d'un dispositif 100-(n+1) du système de communication sans fil critique 10 recevant et/ou traitant ce message, alors noté $\mathcal{M}_{r(n)}$.

L'unité d'identification 1044 est configurée pour déterminer un identifiant $i_{d(n)}$ associé au module de communication directe 1060 du dispositif de communication 100-n, à partir de l'identifiant unique $i_{r(n)}$ du module de communication relayée 1080 du même dispositif de communication 100-n.

En particulier, l'unité d'identification 1044 peut être configurée pour appliquer une fonction f à un identifiant unique $i_r$ pour générer un identifiant associé $i_d$ telle que :

$$i_d = \mathrm{f}(i_r) \qquad (01)$$

Dans l'équation (01), par exemple et sans limitation, la fonction f peut être une fonction de traduction ou de transformation de format, ou encore une application bijective, injective, et/ou surjective.

Dans certains modes de réalisation, un identifiant unique $i_r$ peut être un identifiant MCX comprenant un nombre $N_r$ de digits (par exemple $N_r$=10) et défini dans un format MSISDN (*Mobile Station International Subscriber Directory Number* selon l'expression anglosaxonne correspondante). La fonction f peut alors être une fonction de troncature telle que l'identifiant associé $i_d$ comprend un nombre $N_d$ de digits et tel que $N_d$ est inférieur à $N_r$ ($N_d$<$N_r$ et par exemple $N_d$=7 correspondant aux 7 premiers digits de l'identifiant MCX appelés les 7 digits "call ID").

Avantageusement, l'unité de traitement de message 1042 est configurée pour ajouter au message de communication directe $\mathcal{M}_d$ à émettre par un module de communication directe 1060 une donnée d'identification définie par cet identifiant associé $i_{d(n)}$. Par conséquent, l'identifiant associé $i_{d(n)}$ peut être reconnu par n'importe quel module de gestion 1040 d'un dispositif 100-(n+1) du système de communication sans fil critique 10 traitant ce message, alors noté $\mathcal{M}_{d(n)}$.

Dans des modes de réalisation, l'unité de traitement de message 1042 peut être configurée pour assurer l'émission de façon synchrone du message de communication directe $\mathcal{M}_{d(n)}$ et du message de communication relayée $\mathcal{M}_{r(n)}$ (émis par le module de communication directe 1060 et le module de communication relayée 1080 respectivement), notamment lorsque le dispositif de communication 100-n est connecté au réseau d'interconnexion 200.

Par conséquent, le module de gestion 1040 peut être configuré pour assurer la transmission et la réception des messages entre dispositifs.

Le module de gestion 1040 peut en outre être configuré pour effectuer la duplication des messages entre le mode relayé et le mode direct, ainsi que pour effectuer l'adaptation des messages aux formats attendus dans chacun des modules 1080 et 1060, et du module 1020.

Le module de gestion 1040 peut également prendre en compte des commandes locales de l'utilisateur U-n du dispositif 100-n. Certaines commandes locales peuvent être par exemple une prise d'appel (ou une prise d'alternat) et/ou une signalisation associée à l'acquisition, à la réception et/ou à la transmission de messages, vers chacun des modules 1020, 1080 et 1060. Le module de gestion 1040 peut en outre être configuré pour appliquer un ensemble de règles configurables prenant en entrée les commandes locales et les signalisations effectuées par l'utilisateur U-n pour appliquer des traitements aux différents messages.

Par exemple et sans limitation, en réponse à une commande « prise d'alternat » effectuée par l'utilisateur U-n, une signalisation d'appel peut être générée par le module 1020 vers les modules 1080 et 1060. Les modules 1080 et 1060 peuvent alors être configurés pour acquitter cette signalisation au module de gestion 1040. En réponse à l'acquittement de chacun des deux modules 1080 et 1060, le module de gestion 1040 peut être configuré pour dupliquer et formater un message (initial) vocal acquis par le module 1020, puis pour l'envoyer aux deux modules 1080 et 1060.

Dans des modes de réalisation, l'unité de traitement de message 1042 comprend une sous-unité de sauvegarde de messages (tel qu'un buffer). En particulier, la sous-unité de sauvegarde de messages du dispositif 100-n peut être configurée pour garder en mémoire de façon temporaire le ou les messages $\mathcal{M}_{d(n)}$ et $\mathcal{M}_{r(n)}$ à transmettre.

De façon générale, le module de communication directe 1060 du dispositif de communication 100-n est configuré pour recevoir des messages de communication directe $\mathcal{M}_{d(n+1)}$ transmis par au moins un dispositif 100-(n+1) au travers de la transmission sans fil directe 110-n(n+1). Le module de communication relayée 1080 du dispositif de communication 100-n est configuré pour recevoir des messages de communication relayée $\mathcal{M}_{r(n+1)}$ transmis de dispositifs 100-(n+1) par l'intermédiaire des transmissions sans fil relayée 120-n et 120-(n+1) du réseau d'interconnexion 200.

L'unité de traitement de message 1042 peut alors être configurée pour traiter les messages

$\mathcal{M}_{r(n+1)}$ et/ou les messages $\mathcal{M}_{d(n+1)}$ reçus par les modules 1060 et 1080. En particulier, l'unité de traitement de message 1042 peut être configurée pour convertir les messages $\mathcal{M}_{r(n+1)}$ et/ou $\mathcal{M}_{d(n+1)}$ en des messages convertis, encore appelés 'messages à transmettre' (notés $\mathcal{M}_{tr(n+1)}$ et $\mathcal{M}_{td(n+1)}$) via le module d'acquisition et de transmission de message 1020.

En outre, la sous-unité de sauvegarde de messages du dispositif 100-n peut être configurée pour garder en mémoire de façon temporaire le ou les messages $\mathcal{M}_{d(n+1)}$ et $\mathcal{M}_{r(n+1)}$ reçus.

Dans des modes de réalisation, l'unité d'identification 1044 peut être configurée pour déterminer :

- l'identifiant unique $i_{r(n+1)}$ relatif aux données d'identification du message de communication relayée $\mathcal{M}_{r(n+1)}$, et

- l'identifiant associé $i_{d(n+1)}$ relatif aux données d'identification du message de communication directe $\mathcal{M}_{d(n+1)}$.

Le module de gestion 1040 du premier dispositif de communication 100-n peut alors être configuré pour comparer les identifiants $i_{r(n+1)}$ et $i_{d(n+1)}$ pour déterminer, en fonction du résultat de la comparaison, si le message identifié de communication directe $\mathcal{M}_{d(n+1)}$ et le message de communication relayée $\mathcal{M}_{r(n+1)}$ sont transmis par un même et unique deuxième dispositif de communication 100-(n+1) étant alors associé à un identifiant unique du dispositif, noté $i_{(n+1)}$ (encore appelé identifiant commun). Par exemple, cette comparaison peut être mise en oeuvre par l'unité de traitement de message 1042 et/ou l'unité d'identification 1044.

La sous-unité de sauvegarde de messages du dispositif 100-n peut en outre être configurée pour garder en mémoire une partie ou l'ensemble des identifiants $i_{(n)}$, $i_{r(n)}$ et/ou $i_{d(n)}$ associés aux dispositifs 100-n du système 10. Une partie ou l'ensemble des identifiants peut également être sauvegardé(e) en mémoire dans l'application MCX et être rendu(e) disponible et accessible par le module de gestion 1040 par exemple au moyen de requêtes.

Le module de gestion 1040 du dispositif de communication 100-n peut être configuré pour déterminer l'identifiant unique $i_{r(n+1)}$ et l'identifiant associé $i_{d(n+1)}$ et pour associer chacun de ces identifiants $i_{r(n+1)}$ et $i_{d(n+1)}$ à un même identifiant $i_{(n+1)}$ (ou identifiant commun) relatif au dispositif de communication 100-(n+1). Pour faciliter la compréhension de l'invention et à titre de simplification, la suite de la description sera faite principalement en référence à l'identifiant $i_{(n)}$ (respectivement $i_{(n+1)}$) associé au dispositif de communication 100-n (respectivement 100-(n+1)).

Dans certains modes de réalisation, le module de gestion 1040 de chaque dispositif 100-n du système 10 comprend également une unité de supervision 1046, telle que représentée sur la figure 3.

A la réception par un dispositif 100-n d'un message de communication directe $\mathcal{M}_{d(n+1)}$ associé à l'identifiant $i_{(n+1)}$ du dispositif 100-(n+1), la liaison de communication sans fil directe 110-n(n+1) est établie entre le dispositif émetteur 100-(n+1) et le dispositif de communication 100-n. L'unité de supervision 1046 du dispositif 100-n peut ainsi être configurée pour déterminer un état de connectivité directe $\varepsilon_{d(n\leftrightarrow n+1)}$ correspondant à un état de liaison de communication sans fil directe du dispositif émetteur 100-(n+1) avec ledit dispositif de communication 100-n.

En particulier, un état de connectivité directe $\varepsilon_{d(n\leftrightarrow n+1)}$ peut comprendre par exemple et sans limitation un entier et/ou un élément booléen. L'entier peut être de type binaire. Par exemple, l'état de connectivité directe $\varepsilon_{d(n\leftrightarrow n+1)}$ peut prendre une valeur binaire parmi une première valeur et une deuxième valeur. L'état de connectivité directe $\varepsilon_{d(n\leftrightarrow n+1)}$ peut prendre une première valeur, par exemple égale à '1' (ou 'vrai') si le dispositif 100-n reçoit les messages de communication directe émis par le dispositif 100-(n+1) (i.e. à portée radio directe), ou une deuxième valeur, par exemple égale à '0' (ou 'faux'), si le dispositif 100-n ne reçoit plus les messages de communication directe émis par le dispositif 100-(n+1) (i.e. hors portée radio directe, c'est-à-dire n'ayant pas reçu de message de communication directe $\mathcal{M}_{d(n+1)}$ depuis une durée déterminée). Ainsi, un état de connectivité directe $\varepsilon_{d(n\leftrightarrow n+1)}$ peut également comprendre une date relative à un horodatage correspondant à la dernière liaison de communication sans fil directe 110-n(n+1) établie entre le dispositif émetteur 100-(n+1) et le dispositif de communication 100-n.

L'unité de supervision 1046 du dispositif 100-n peut être en outre configurée pour générer (c'est-à-dire déterminer et mettre à jour) une structure de donnée, également appelée 'matrice de connectivité élémentaire' notée $\mathcal{T}_{(n)}$, comprenant les états de connectivité directe $\varepsilon_{d(n\leftrightarrow n+1)}$ de chacun des autres dispositifs de communication 100-(n+1) de l'ensemble du système 10 avec le dispositif 100-n. Chacun des états de connectivité directe $\varepsilon_{d(n\leftrightarrow n+1)}$ est alors associé aux différents identifiants uniques $i_{(n+1)}$ des dispositifs 100-(n+1) du système 10.

Dans des modes de réalisation, la matrice élémentaire $\mathcal{T}_{(n)}$ peut en outre être générée à partir de la matrice de connectivité relayée $\mathcal{T}_r$. La matrice de connectivité élémentaire $\mathcal{T}_{(n)}$ peut être initialisée lorsque tous les dispositifs du système 10 sont « en ligne » (c'est-à-dire connectés au réseau 200) et à portée radio directe dans un mode opérationnel. Une telle initialisation de matrice peut être mise en oeuvre au début d'une mission ou d'une intervention spécifique mené par les utilisateurs du système 10. Par conséquent, la matrice de connectivité élémentaire $\mathcal{T}_{(n)}$ peut être mise à jour à chaque réception d'un message de communication directe $\mathcal{M}_{d(n+1)}$. La matrice élémentaire $\mathcal{T}_{(n)}$ peut être mise à jour (ou enrichie et complétée) en réponse à l'établissement d'une liaison de communication sans fil directe 110-n(n+1) et/ou d'une transmission sans fil relayée 120-n active au réseau d'interconnexion 200.

Dans des modes de réalisation, le module de gestion 1040 du dispositif de communication 100-n peut comprendre une horloge interne (non représentée sur les figures). Avantageusement, dans ce cas, l'unité de supervision 1046 peut être configurée pour affecter un horodatage $t_{(n+1)}$ à chaque état de connectivité direct $\varepsilon_{d(n\leftrightarrow n+1)}$ associé à l'instant de réception du dernier message de communication directe $\mathcal{M}_{d(n+1)}$ (établissement d'une liaison de communication sans fil directe 110-n(n+1)), en utilisant l'horloge interne prévue dans le module 1040. Par exemple et sans limitation, l'unité de supervision 1046 peut déterminer un état de connectivité direct $\varepsilon_{d(n\leftrightarrow n+1)}$ égal à '0' (ou 'faux') si le dispositif 100-n ne reçoit plus de message de communication directe émis par le dispositif 100-(n+1) à un instant $t$, l'instant $t$ étant défini par rapport à un seuil de surveillance de communication $\tau_c$ tel que défini par l'équation (02) suivante, ce qui indique que le dispositif 100-(n+1) est hors portée radio directe :

$$t - t_{(n+1)} \geq \tau_c \qquad (02)$$

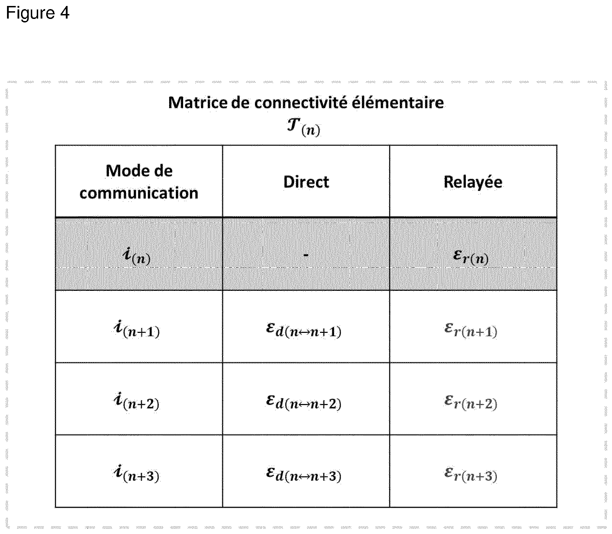

La figure 4 illustre un exemple d'une matrice de

connectivité élémentaire $\mathcal{T}_{(n)}$ d'un dispositif 100-n dans un système 10 comprenant les dispositifs 100-n, 100-(n+1), 100-(n+2) et 100-(n+3). La matrice de connectivité élémentaire $\mathcal{T}_{(n)}$ est représentée dans cet exemple par une table de données comprenant les informations relatives aux états de connectivité relayée $\varepsilon_{r(n)}$, $\varepsilon_{r(n+1)}$, $\varepsilon_{r(n+2)}$ et $\varepsilon_{r(n+3)}$ de chaque dispositif 100-n, 100-(n+1), 100-(n+2) et 100-(n+3) du système 10. La table de données pour un dispositif 100-n peut comprendre également les informations relatives aux états de connectivité directe $\varepsilon_{d(n\leftrightarrow n+1)}$, $\varepsilon_{d(n\leftrightarrow n+2)}$ et $\varepsilon_{d(n\leftrightarrow n+3)}$ de chaque dispositif 100-(n+1), 100-(n+2) et 100-(n+3) du système 10 avec le dispositif 100-n. En outre, chacun des états de connectivité directe $\varepsilon_{d(n\leftrightarrow n+1)}$, $\varepsilon_{d(n\leftrightarrow n+2)}$ et $\varepsilon_{d(n\leftrightarrow n+3)}$ peut être associé à un horodatage respectif (c'est-à-dire $t_{(n+1)}$, $t_{(n+2)}$ et $t_{(n+3)}$, non représentés sur la figure 4).

Le module de gestion 1040 du dispositif de communication 100-n peut être configuré pour déterminer un message de connectivité relayée noté $\mathcal{M}_{\mathcal{T}(n)}$ à partir de la matrice de connectivité élémentaire $\mathcal{T}_{(n)}$.

Selon certains modes de réalisation, le module de communication relayée 1080 du dispositif de communication 100-n peut être configuré pour émettre ce message de connectivité relayée $\mathcal{M}_{\mathcal{T}(n)}$ seulement si le dispositif de communication 100-n est « en ligne », c'est-à-dire connecté au réseau d'interconnexion 200.

Dans des modes de réalisation, l'émission du message de connectivité relayée $\mathcal{M}_{\mathcal{T}(n)}$ peut être effectuée en fonction de paramètres d'émission de connectivité prédéfinis. Par exemple, le module de gestion 1040 du dispositif de communication 100-n (comprenant une horloge interne) peut être configuré pour utiliser un paramètre d'émission de connectivité défini par la répétition de manière régulière de l'émission du message de connectivité relayée $\mathcal{M}_{\mathcal{T}(n)}$ en fonction d'une fréquence temporelle d'émission $f_e$ prédéfinie telle que $f_e = 1/\tau_e$. Le module de gestion 1040 du dispositif de communication 100-n peut en outre utiliser un autre paramètre d'émission de connectivité correspondant à un paramètre de mise à jour de la matrice de connectivité élémentaire $\mathcal{T}_{(n)}$ générant l'émission du message de connectivité relayée $\mathcal{M}_{\mathcal{T}(n)}$ réactualisé.

Par exemple et sans limitation, le message de connectivité relayée $\mathcal{M}_{\mathcal{T}(n)}$ peut être vide si la matrice

de connectivité élémentaire $\mathcal{T}_{(n)}$ reste inchangée entre deux émissions du message de connectivité relayée $\mathcal{M}_{\mathcal{T}(n)}$, c'est-à-dire si aucun état de connectivité relayée et/ou directe n'a été modifié. Ceci implique notamment que le dispositif 100-n a réceptionné au moins un message de communication directe $\mathcal{M}_{d(n+1)}$ de chacun des autres dispositifs émetteurs 100-(n+1) pendant l'intervalle de temps $\tau_e$ entre les deux émissions du message de connectivité relayée $\mathcal{M}_{\mathcal{T}(n)}$. Alternativement, le message de connectivité relayée $\mathcal{M}_{\mathcal{T}(n)}$ peut comprendre une partie ou l'ensemble de la matrice de connectivité élémentaire $\mathcal{T}_{(n)}$, si au moins un état de connectivité relayée et/ou directe de la matrice de connectivité élémentaire $\mathcal{T}_{(n)}$ est modifié. Le message de connectivité relayée $\mathcal{M}_{\mathcal{T}(n)}$ peut comprendre par exemple l'identifiant $i_{(n+1)}$ du dispositif 100-(n+1) n'ayant pas établi de liaison de communication sans fil directe 110-n(n+1). Un tel mode de réalisation d'émission différentielle de message a l'avantage de permettre la génération de messages compacts, et notamment moins importants (en termes de taille) qu'un message généré selon un mode de réalisation impliquant l'émission systématique de la matrice $\mathcal{T}_{(n)}$.

Dans des modes de réalisation, un procédé de supervision des communications sans fil critiques peut alors être mis en oeuvre par un ou plusieurs équipements de supervision 400 compris dans système de communication sans fil critique 10. Un équipement de supervision 400 peut être un dispositif de communication connecté au réseau d'interconnexion 200 et/ou le centre de communication 210 (via le serveur MCX par exemple). Un équipement de supervision 400 peut notamment être configuré pour recevoir les messages de connectivité relayés $\mathcal{M}_{\mathcal{T}(n)}$ envoyés par chaque dispositif de communication 100-n connecté au réseau d'interconnexion 200 et en déduire les matrices de connectivité élémentaires $\mathcal{T}_{(n)}$ associées. En particulier, si l'équipement de supervision 400 est un dispositif de communication 100-n, le module de communication relayée 1080 reçoit les messages de connectivité relayés $\mathcal{M}_{\mathcal{T}(n)}$ et le module de gestion 1040 (via l'unité de traitement de message 1042 et l'unité d'identification 1044 par exemple), et les traite pour en déduire les matrices de connectivité élé-

mentaires $\mathcal{T}_{(n)}$ associées.

Selon des modes de réalisation, l'équipement de supervision 400 peut être configuré pour associer à chaque matrice de connectivité élémentaire $\mathcal{T}_{(n)}$ reçu un horodatage $t_{\mathcal{T}(n)}$, en utilisant une horloge interne prévue dans le module de gestion 1040. Par exemple, un horodatage $t_{\mathcal{T}(n)}$ peut comprendre au moins une donnée temporelle relative à l'émission et/ou à la réception du message de connectivité relayé $\mathcal{M}_{\mathcal{T}(n)}$ reçu.

Un équipement de supervision 400 peut en outre être configuré pour générer (i.e. déterminer et mettre à jour) une structure de donnée, également appelée 'matrice de connectivité globale' notée $\mathcal{T}$, notamment à partir de l'ensemble des matrices de connectivité élémentaires $\mathcal{T}_{(n)}$ reçues. En particulier, la matrice de connectivité globale $\mathcal{T}$ peut être initialisée lorsque tous les dispositifs du système 10 sont « en ligne » (i.e. connectés au réseau 200) et à portée radio directe dans un mode opérationnel. Une telle initialisation de matrice peut être mise en oeuvre au début d'une mission ou d'une intervention spécifique menée par les utilisateurs du système 10. La matrice de connectivité globale $\mathcal{T}$ peut ensuite être mise à jour selon une fréquence prédéfinie par l'équipement de supervision 400 et/ou à chaque réception de message de connectivité relayé $\mathcal{M}_{\mathcal{T}(n)}$.

Dans un mode de réalisation, la matrice de connectivité globale $\mathcal{T}$ peut comprendre l'ensemble des identifiants $i_{(n)}$ des dispositifs 100-n du système 10 et une information de 'statut' associé à chacun des identifiants $i_{(n)}$. Par exemple et sans limitation, un statut peut être « connecté réseau et mode direct », « connecté réseau », « connecté mode direct » ou « non connecté ».

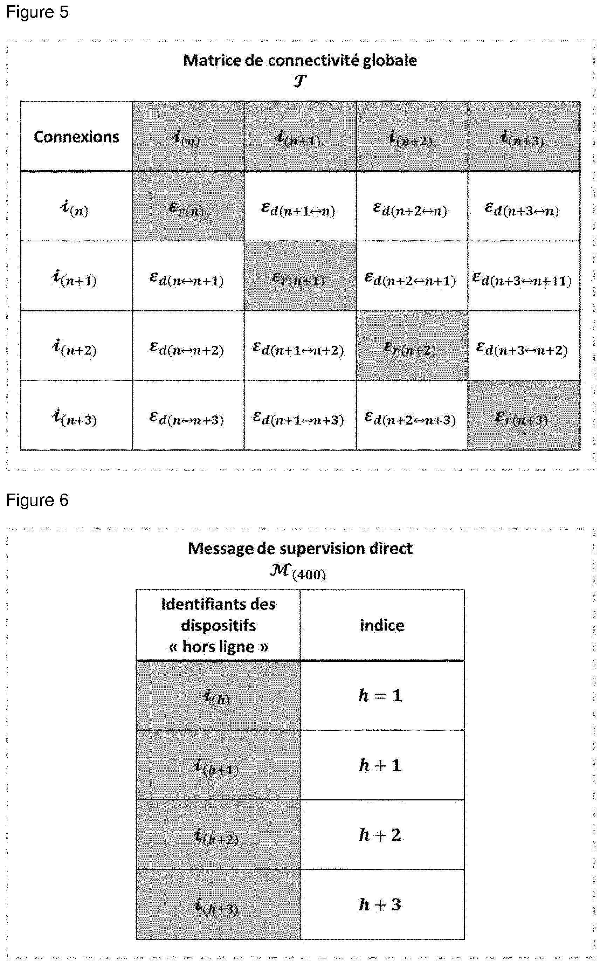

La figure 5 représente une matrice connectivité globale $\mathcal{T}$ d'un système 10 comprenant les dispositifs 100-n, 100-(n+1), 100-(n+2) et 100-(n+3), selon un autre exemple de réalisation. La matrice de connectivité globale $\mathcal{T}$ est représentée dans cet exemple par une table de données comprenant les informations relatives aux états de connectivité relayée $\varepsilon_{r(n)}$, $\varepsilon_{r(n+1)}$, $\varepsilon_{r(n+2)}$ et $\varepsilon_{r(n+3)}$ de chacun des dispositifs du système 10. La table de données comprend également :

- les informations relatives aux états de connectivité directe $\varepsilon_{d(n\leftrightarrow n+1)}$, $\varepsilon_{d(n\leftrightarrow n+2)}$ et $\varepsilon_{d(n\leftrightarrow n+3)}$ des dispositifs 100-(n+1), 100-(n+2) et 100-(n+3) du système 10 avec le dispositif 100-n, mises à jour à chaque réception de message de connectivité relayé $\mathcal{M}_{\mathcal{T}(n)}$ ;

- les informations relatives aux états de connectivité directe $\varepsilon_{d(n+1\leftrightarrow n)}$, $\varepsilon_{d(n+1\leftrightarrow n+2)}$ et $\varepsilon_{d(n+1\leftrightarrow n+3)}$ des dispositifs 100-n, 100-(n+2) et 100-(n+3) du système 10 avec le dispositif 100-(n+1), mises à jour à chaque réception de message de connectivité relayé $\mathcal{M}_{\mathcal{T}(n+1)}$ ;

- les informations relatives aux états de connectivité directe $\varepsilon_{d(n+2\leftrightarrow n)}$, $\varepsilon_{d(n+2\leftrightarrow n+1)}$ et $\varepsilon_{d(n+2\leftrightarrow n+3)}$ des dispositifs 100-n, 100-(n+1) et 100-(n+3) du système 10 avec le dispositif 100-(n+2), mises à jour à chaque réception de message de connectivité relayé $\mathcal{M}_{\mathcal{T}(n+2)}$ ; et

- les informations relatives aux états de connectivité directe $\varepsilon_{d(n+3\leftrightarrow n)}$, $\varepsilon_{d(n+3\leftrightarrow n+1)}$ et $\varepsilon_{d(n+3\leftrightarrow n+2)}$ des dispositifs 100-n, 100-(n+1) et 100-(n+2) du système 10 avec le dispositif 100-(n+3), mises à jour à chaque réception de message de connectivité relayé $\mathcal{M}_{\mathcal{T}(n+3)}$.

Ainsi, bien qu'un dispositif 100-n agencé uniquement à portée radio directe ne puisse pas transmettre de message de connectivité relayé $\mathcal{M}_{\mathcal{T}(n)}$, la matrice de connectivité globale T comprend des informations relatives à l'état des liaisons de communication directes du dispositif 100-n, via les états de connectivité directe $\varepsilon_{d(n+1\leftrightarrow n)}$, $\varepsilon_{d(n+2\leftrightarrow n)}$ et $\varepsilon_{d(n+3\leftrightarrow n)}$ du dispositif 100-n avec les dispositifs 100-(n+1), 100-(n+2) et 100-(n+3) du système 10, mis à jour à chaque réception des messages de connectivité relayé $\mathcal{M}_{\mathcal{T}(n+1)}$, $\mathcal{M}_{\mathcal{T}(n+2)}$ et $\mathcal{M}_{\mathcal{T}(n+3)}$ si ces dispositifs sont « en ligne ».

En outre, chacun des états de connectivité (relayé et/ou directe) de la matrice de connectivité globale $\mathcal{T}$ peut être associé à un ou plusieurs horodatages respectifs (non représentés sur la figure 5). Un tel horodatage peut être un horodatage lié aux états de connectivité directe $t_{(n)}$, $t_{(n+1)}$, $t_{(n+2)}$ et $t_{(n+3)}$, et/ou un horodatage lié à la réception du message de connectivité relayé $t_{\mathcal{T}(n)}$, $t_{\mathcal{T}(n+1)}$, $t_{\mathcal{T}(n+2)}$ et $t_{\mathcal{T}(n+3)}$.

Dans un mode de réalisation, le centre de communication 210 peut être configuré pour déterminer (i.e. sélectionner) l'équipement de supervision 400 comme étant l'un des dispositifs de communication parmi l'ensemble des dispositifs du système 10 connectés au réseau d'interconnexion 200, selon un ou plusieurs critères de sélection. Par exemple et sans limitation, l'équipement de supervision 400 peut être le dispositif « en ligne » 100-n comprenant le plus de dispositifs à portée radio directe, c'est-à-dire que l'équipement de supervision 400 peut être le dispositif de communication 100-n comprenant le plus grand nombre d'états de connectivité directe $\varepsilon_{d(n \leftrightarrow n+1)} = 1$ de l'ensemble des dispositifs du système 10.

Dans ce mode de réalisation, l'équipement de supervision 400 peut être configuré pour recevoir les messages de communication directes $\mathcal{M}_{d(n)}$ de dispositifs de communication 100-n « hors ligne » agencé à sa portée radio directe, puis pour répéter certains des messages $\mathcal{M}_{d(n)}$ par l'intermédiaire du mode de communication relayée, de manière à les transmettre par exemple à d'autres dispositifs connectés au réseau d'interconnexion 200 et hors de portée radio directe du dispositif 100-n. Dans ce cas, suivant une commande de répétition donnée, l'équipement de supervision 400 (par exemple via un module de gestion 1040) peut être en outre configuré pour déterminer un message dit « message à répéter » de communication relayée, noté $\mathcal{M}_{r(400)}^{(n)}$, à partir du message reçu de communication directe $\mathcal{M}_{d(n)}$ transmis par le dispositif de communication 100-n « hors ligne », de l'identifiant unique $i_{(400)}$ de l'équipement de supervision 400 et de l'identifiant déterminé $i_{(n)}$ associé au dispositif de communication 100-n « hors ligne ». L'équipement de supervision 400 peut alors être configuré pour émettre, uniquement selon le mode de communication relayée (i.e. uniquement via le module de communication relayée 1080), le message à répéter de communication relayée $\mathcal{M}_{r(400)}^{(n)}$.

Dans des modes de réalisation, l'équipement de supervision 400 peut être configuré pour déterminer une liste de contrôle comprenant au moins un et/ou l'ensemble des dispositifs « hors ligne » du système 10, la liste de contrôle étant déterminée à partir de la matrice de connectivité globale . L'équipement de supervision 400 peut être en outre configuré pour déterminer un message de supervision noté $\mathcal{M}_{(400)}$ à partir de la liste de contrôle, puis pour émettre le message de supervision $\mathcal{M}_{(400)}$ uniquement selon le mode de communication direct (par exemple uniquement via le module de communication directe 1060 de l'équipement de supervision 400 si c'est un dispositif de communication). Le message de supervision $\mathcal{M}_{(400)}$ peut être émis de manière répétée selon des paramètres d'émission de supervision prédéfinie. Par exemple, un paramètre d'émission de supervision peut être défini par la répétition de manière régulière de l'émission du message de supervision $\mathcal{M}_{(400)}$ en fonction d'une fréquence temporelle de supervision $f_s$ prédéfinie ($f_s$ prédéfinie telle que $f_s = 1/\tau_s$) et en utilisant une horloge interne prévue dans le module 1040. L'équipement de supervision 400 peut en outre comprendre un autre paramètre d'émission de supervision qui peut être un paramètre de mise à jour de la liste de contrôle (via la mise à jour préalable de la matrice de connectivité globale $\mathcal{T}$) pour générer l'émission du message de supervision $\mathcal{M}_{(400)}$ réactualisé.

Dans des modes de réalisation, l'équipement de supervision 400 peut être un dispositif 100-n et comprendre une unité de supervision 1046. L'unité de supervision 1046 de l'équipement de supervision 400 peut comprendre une horloge de supervision (non représentée sur les figures) associée à l'horloge interne prévue dans le module de gestion 1040. En outre, l'horloge de supervision de l'équipement de supervision 400 peut être liée à la supervision d'un ou plusieurs dispositifs 100-n déconnectés du réseau 200. Par exemple et de façon non limitative, l'horloge de supervision de l'équipement de supervision 400 peut être mise à 0 ($\tau = 0$) et activée lorsqu'un dispositif 100-n est déconnecté du réseau 200.

Selon des modes de réalisation, l'horloge de supervision de l'équipement de supervision 400 peut également être initialisée en fonction d'une ou plusieurs valeurs associées à un ou plusieurs horodatages $t_{(n+1)}$ relatifs aux différents états de connectivité direct $\varepsilon_{d(h \leftrightarrow n+1)}$ et/ou des horodatages $t_{\mathcal{T}(n)}$ relatifs aux matrices de connectivité élémentaires $\mathcal{T}_{(n)}$ reçues. L'horloge de supervision de l'équipement de supervision 400 peut aussi être initialisée si un message de communication direct quelconque (i.e. $\mathcal{M}_{d(n)}$ ou $\mathcal{M}_{s(n)}$), émis par le dispositif 100-n déconnecté du réseau 200, est reçu par l'équipement de supervision 400. L'équipement de supervision 400 peut ainsi être configuré pour surveiller les communications directes associées au trafic 'naturel' de communication entre les différents dispositifs du système 10, et pour adapter l'émission du message de supervision $\mathcal{M}_{(400)}$ et/ou la fréquence temporelle de supervision $f_s$ en fonction de ce trafic naturel.

Dans des modes de réalisation, l'horloge de supervision de l'équipement de supervision 400 peut atteindre la valeur temporelle associée à la fréquence de supervision, tel que $\tau = \tau_s$, alors le message de supervision $\mathcal{M}_{(400)}$ est déterminé puis émis.

Dans des modes de réalisation, la liste de contrôle peut comprendre un ensemble de $\mathcal{H}$ de dispositifs « hors ligne », notés 100-h (i.e. l'indice 'h' étant associé à différents utilisateurs finaux avec des dispositifs non connectés au réseau d'interconnexion 200). Le message de supervision $\mathcal{M}_{(400)}$ peut être déterminé à partir de l'identifiant unique $i_{(h)}$ de chacun des $\mathcal{H}$ dispositifs de communication 100-h de la liste de contrôle. Comme représenté dans l'exemple de la figure 6, le message de supervision $\mathcal{M}_{(400)}$ peut comprendre chaque identifiant unique $i_{(h)}$ associé à un indice de réponse $h$ compris entre 1 et $\mathcal{H}$. Par exemple, cet indice de réponse $h$ peut être indiqué dans le message de supervision $\mathcal{M}_{(400)}$ ou déduit par traitement du message.

En particulier, l'ordre des identifiants dans la liste de contrôle (c'est-à-dire leur indice de réponse h) peut dépendre de la durée de non-établissement de liaison de communication sans fil directe 110-n(n+1), une durée de non-établissement étant obtenue à partir des horodatages par exemple. L'équipement de supervision 400 peut ainsi être configuré pour déterminer la durée depuis laquelle un dispositif est non connecté au mode direct et pour trier les identifiants des dispositifs non connectés au mode direct en fonction de cette durée déterminée. Par exemple, l'indice de réponse h égal à 1 peut être associé au dispositif non connecté au mode direct depuis la durée qui est la plus longue.

Dans des modes de réalisation, le module de gestion 1040 (par exemple l'unité de supervision 1046) d'un dispositif de communication 100-n peut être configuré pour activer (c'est-à-dire déclencher) un mode de supervision individuelle en réponse à la déconnexion du dispositif au réseau d'interconnexion 200 à instant t noté $t_r$, en utilisant une horloge interne prévue dans le module de gestion 1040.

En réponse à l'activation du mode de supervision individuelle (i.e. à l'instant $t_r$), l'unité de supervision 1046 d'un dispositif « hors ligne » 100-h peut être configuré pour déclencher une alerte pour notifier une perte de connexion au réseau d'interconnexion 200, en utilisant un ou plusieurs moyens d'alerte de perte de réseau. Par exemple et sans limitation, un moyen d'alerte de perte de réseau peut être mis en oeuvre via le module d'acquisition et de transmission de message 1020 pour informer l'utilisateur final U-h de cette perte de réseau. Le module 1020 peut comprendre au moins une diode électroluminescente (par exemple affectée au mode relayé) et un microphone, le microphone exécutant un signal sonore court et la diode électroluminescente affectée au mode relayé effectuant des émissions lumineuses intermittentes (comme par exemple des flashs lumineux lents), en réponse à l'activation du mode de supervision individuelle. Les émissions lumineuses intermittentes peuvent être maintenues de façon continue jusqu'à la fin du mode de supervision individuelle. Selon d'autres exemples, un moyen d'alerte pour informer l'utilisateur final U-h de cette perte de réseau peut être mis en oeuvre via le module de communication relayée 1080. Le module 1080 peut comprendre par exemple un terminal téléphonique muni d'une interface graphique dans laquelle est généré un affichage d'un indicateur de perte de réseau, tel que par exemple un icône de réseau barré pouvant clignoter pour indiquer la perte de réseau, en réponse à l'activation du mode de supervision individuelle, jusqu'à ce que le dispositif soit de nouveau « en ligne ».

Dans des modes de réalisation, en réponse à l'activation du mode de supervision individuelle, un autre moyen d'alerte de la perte de réseau peut être mis en oeuvre via le module de communication directe 1060 du dispositif 100-h pour informer les autres utilisateurs U-(n+1) du système 10 de cette perte de réseau du dispositif 100-h. Le module de communication directe 1060 du dispositif « hors ligne » 100-h peut être configuré pour émettre un message d'avertissement de communication directe à tout dispositif du système 10 à portée directe radio pour informer de la perte de connexion réseau du dispositif « hors ligne » 100-h. Le message d'avertissement de communication direct peut être un message de communication directe $\mathcal{M}_{d(h)}$ comprenant notamment l'état de connectivité relayée $\varepsilon_r(h)$ du dispositif 100-h.

Dans des modes de réalisation, l'unité de supervision 1046 d'un dispositif « hors ligne » 100-h peut comprendre une horloge de supervision (non représentée sur les figures) associée à l'horloge interne prévue dans le module de gestion 1040. En outre, à l'activation du mode de supervision individuelle (i.e. à l'instant $t_r$), l'horloge de supervision du dispositif 100-h peut être initialisé à 0 ($\tau = 0$) et activé.

Selon des modes de réalisation, l'horloge de supervision du dispositif 100-h peut également être initialisée en fonction d'une ou plusieurs valeurs associées à un ou plusieurs horodatages $t_{(n+1)}$ relatifs aux états de connectivité directe $\varepsilon_{d(h \leftrightarrow n+1)}$. Par exemple, pendant le mode de supervision individuelle (i.e. à un instant $t \geq t_r$), l'horloge de supervision du dispositif 100-h peut être réinitialisée à 0 ($\tau = 0$) et remise en marche, si le module de communication directe 1060 du dispositif « hors ligne » 100-h reçoit un message identifié de communication directe $\mathcal{M}_{d(n+1)}$ transmis par n'importe quel autre dispositif de communication 100-(n+1) du système 10. Dans ce cas, au moins un état de connectivité direct $\varepsilon_{d(h \leftrightarrow n+1)}$ (égale à '1' par exemple) permet une liaison de communication sans fil directe 110-h(n+1) entre le dispositif « hors ligne » 100-h et ledit dispositif 100-(n+1) (qui peut être « en ligne » ou « hors ligne »).

Pendant le mode de supervision individuelle, l'horloge de supervision du dispositif 100-h peut prendre une valeur qui dépasse un seuil de temps de supervision notée $\tau_h$ prédéfinie, tel que $\tau \geq \tau_h$. Par exemple, le seuil de temps de supervision notée $\tau_h$ peut être égal ou défini à partir du seuil de surveillance de communication $\tau_c$.

L'unité de supervision 1046 du dispositif « hors ligne » 100-h peut être configurée pour effectuer un déclenchement d'une alerte de perte de réseau pour toutes les connexions, en utilisant un ou plusieurs moyens d'alerte de perte de connectivité, pour indiquer une perte de connexion au réseau d'interconnexion 200 et une interruption de liaisons à tous dispositifs 100-(n+1) par communication sans fil direct, hors de portée radio directe. Par exemple et sans limitation, un moyen d'alerte pour informer l'utilisateur final U-h de cette perte de connectivité peut être mis en oeuvre en utilisant le module d'acquisition et de transmission de message 1020 et/ou le module de communication relayée 1080. Dans ce cas, le microphone du module 1020 peut par exemple exécuter un signal sonore selon des impulsions répétées toutes les secondes, et la diode électroluminescente (affectée au mode relayé) peut effectuer des émissions lumineuses intermittentes, tandis qu'une autre diode électroluminescente (affectée au mode directe) peut être utilisée pour effectuer des émissions lumineuses intermittentes. Un indicateur de communication directe tel qu'un icône de communication directe barré et clignotant peut par exemple être affiché sur l'interface graphique du terminal téléphonique du module 1080 (écran par exemple) en plus de l'indicateur de perte de connexion (icône réseau barré clignotant).

L'unité de supervision 1046 d'un dispositif 100-n peut être configurée pour mettre en oeuvre un ou plusieurs moyens d'alerte d'interruption de liaisons directes associés à l'interruption de toutes liaisons associés à l'ensemble des dispositifs 100-(n+1) par communication sans fil direct car hors de portée radio directe, même lorsque le dispositif est « en ligne » (i.e. relié au réseau d'interconnexion 200). Par exemple et sans limitation, un moyen d'alerte pour informer l'utilisateur final U-n de cette interruption de liaisons directes peut être mis en oeuvre en utilisant le module d'acquisition et de transmission de message 1020 et/ou le module de communication relayée 1080. Le haut-parleur du module 1020 peut par exemple exécuter un signal sonore selon des impulsions répétées toutes les secondes et la diode électroluminescente (affectée au mode directe) peut effectuer des émissions lumineuses intermittentes. Un indicateur de communication directe tel qu'un icône de communication direct barré et clignotant, peut être affiché sur l'écran du terminal téléphonique du module 1080, alors que l'indicateur de perte de réseau n'est pas activé (l'icône de perte de réseau n'est pas barré et ne clignote pas) pour indiquer une connexion stable au réseau 200.

Dans des modes de réalisation, pendant le mode de supervision individuelle (i.e. à un instant $t \geq t_r$), l'horloge de supervision du dispositif 100-h peut être remise à 0 tel ($\tau = 0$) et réactivée si le module de communication directe 1060 du dispositif « hors ligne » 100-h reçoit un message de supervision $\mathcal{M}_{(400)}$ provenant de l'équipement de supervision 400. La fréquence de réception de messages de supervision $\mathcal{M}_{(400)}$ peut être égale à (ou prédéfinie en fonction de) la fréquence temporelle de supervision $f_s$ d'émission de ces messages induit par l'équipement de supervision 400. Avantageusement, l'intervalle de temps $\tau_s$, associé à la fréquence temporelle de supervision $f_s$ peut être inférieure ou égale au seuil de temps de supervision $\tau_h$, telle que $\tau_s \leq \tau_h$, ce qui permet d'assurer que le dispositif « hors ligne » 100-h comprend au moins une liaison à de communication sans fil direct (c'est-à-dire est au moins connecté à l'équipement de supervision 400). Par conséquent, le rythme d'émission de messages de supervision $\mathcal{M}_{(400)}$ par l'équipement de supervision 400 est supérieur au rythme de supervision individuelle (i.e. locale) d'un dispositif 100-h, notamment lorsqu'il n'y a pas de trafic naturel de communication directe.

Dans certains modes de réalisation, l'unité de traitement de message 1042 peut être configurée pour enregistrer le message de supervision $\mathcal{M}_{(400)}$ provenant par l'équipement de supervision 400, par exemple dans une mémoire de sauvegarde telle que la sous-unité de sauvegarde du module 1040.

Dans des modes de réalisation, le module de communication directe 1060 du dispositif « hors ligne » 100-h peut être configuré pour déterminer puis émettre un message de réponse en communication directe $\mathcal{M}_{s(h)}$, en réponse au message de supervision $\mathcal{M}_{(400)}$ reçu. Ce message de réponse en communication directe $\mathcal{M}_{s(h)}$ peut être un message simple (par exemple textuel) comprenant notamment l'identifiant unique $i_{(h)}$ et destiné à confirmer la réception du message de supervision $\mathcal{M}_{(400)}$. Pour cela, l'équipement de supervision 400 et/ou n'importe quel dispositif 100-(n+1) du système 10 peut être configuré pour recevoir les messages de réponse en communication directe $\mathcal{M}_{s(h)}$ et pour mettre à jour les matrices de connectivité élémentaires $\mathcal{T}_{(n+1)}$ et/ou la matrice de connectivité globale T.

Selon certains modes de réalisation, l'unité de supervision 1046 du dispositif « hors ligne » 100-h peut en outre être configuré pour déterminer l'indice de réponse $h$ (compris entre 1 et $\mathcal{H}$) associé à l'identifiant unique $i_{(h)}$ du dispositif de communication 100-h à partir du message de supervision $\mathcal{M}_{(400)}$ reçu. L'unité de supervision 1046 du dispositif « hors ligne » 100-h peut être configurée pour transmettre le message de réponse en communication directe $\mathcal{M}_{s(h)}$ à émettre au module 1060, après une durée de contrôle $t_c$ définie à partir d'une durée initiale $\tau_i$ donnée et de l'indice de réponse $h$, la durée de contrôle $t_c$ étant définie par exemple par l'équation (03) suivante :

$$t_c = (h - 1) \times \tau_i \qquad (03)$$

Dans certains modes de réalisation, le module de gestion 1040 des dispositifs 100-n du système 10 comprend également une unité de géolocalisation 1048, telle que représentée sur la figure 3.

Une unité de géolocalisation 1048 peut être configurée pour fournir des données de géolocalisation du dispositif de communication 100-n. Le module de gestion 1040 peut alors être configuré pour associer au moins une partie de ces données de géolocalisation à une partie ou à tous les messages de communication directe et/ou les messages de communication relayée émis par le dispositif 100-n. Par exemple, le module de gestion 1040 d'un dispositif « hors ligne » 100-h peut être configuré pour associer aux messages de réponse en communication directe $\mathcal{M}_{s(h)}$ au moins une partie des données de géolocalisation du dispositif « hors ligne » 100-h. Dans ce cas, l'équipement de supervision 400 peut être configuré pour extraire les informations relatives aux données de géolocalisation du dispositif « hors ligne » 100-h, à partir de messages de réponse en communication directe $\mathcal{M}_{s(h)}$ reçus et géolocalisés, et les associés à chaque identifiant $i_{(h)}$. En particulier, l'équipement de supervision 400 peut être agencé pour compléter la matrice de connectivité globale $\mathcal{T}$ avec ces informations de manière à déterminer une cartographie du positionnement des différents dispositifs non connectés au réseau 200.

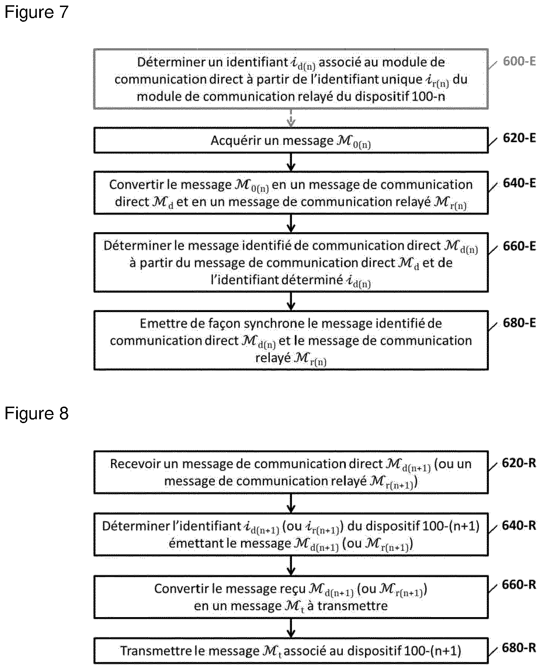

La figure 7 est un organigramme décrivant le procédé de gestion de communication sans fil critique, mis en oeuvre par un dispositif de communication 100-n, pour l'émission d'un message, selon des modes de réalisation de l'invention.

A l'étape 600-E d'initialisation du dispositif de communication 100-n, l'identifiant $i_{d(n)}$ associé au module de communication directe 1060 du dispositif 100-n est déterminé à partir de l'identification unique $i_{r(n)}$ du module de communication relayée 1080 du dispositif 100-n.

A l'étape 620-E, le message $\mathcal{M}_{0(n)}$ est acquis via le module d'acquisition de message 1020.

A l'étape 640-E, le message $\mathcal{M}_{0(n)}$ est converti en un message de communication directe $\mathcal{M}_d$ en fonction du protocole de communication directe et en un message de communication relayée $\mathcal{M}_{r(n)}$ en fonction du protocole de communication relayée.

A l'étape 660-E, le message identifié de communication directe $\mathcal{M}_{d(n)}$ est déterminé à partir du message de communication directe $\mathcal{M}_d$ et de l'identifiant associé $i_{d(n)}$.

A l'étape 680-E, le message identifié de communication directe $\mathcal{M}_{d(n)}$ et le message de communication relayée $\mathcal{M}_{r(n)}$ sont transmis de façon synchrone (et donc par redondance) respectivement par l'intermédiaire du mode de communication directe par le module de communication directe 1060 et du mode de communication relayée par le module de communication relayée 1080.

L'homme du métier comprendra aisément que les étapes 640-E et 660-E peuvent être réalisées de manière simultanée et/ou selon un ordre différent, par exemple un ordre donné défini par le module de gestion 1040.

La figure 8 est un organigramme selon des modes de réalisation de l'invention décrivant des étapes du procédé de gestion de communication sans fil critique pour la réception d'un message, mis en oeuvre par un dispositif de communication 100-n.

A l'étape 620-R, un message de communication directe $\mathcal{M}_{d(n+1)}$ (ou un message de communication relayée $\mathcal{M}_{r(n+1)}$) émis par un dispositif de communication 100-(n+1) est reçu par le dispositif de communication 100-n, par l'intermédiaire du mode de communication directe par le module de communication directe 1060 (et/ou du mode de communication relayée par le module de communication relayée 1080).

A l'étape 640-R, l'identifiant $i_{d(n+1)}$ (et/ou l'identifiant $i_{r(n+1)}$) du dispositif de communication 100-(n+1) est déterminé à partir de données d'identification du message reçu $\mathcal{M}_{d(n+1)}$ (ou $\mathcal{M}_{r(n+1)}$).

A l'étape 660-R, le message reçu $\mathcal{M}_{d(n+1)}$ (et/ou $\mathcal{M}_{r(n+1)}$ ) est converti en un message $\mathcal{M}_t$ à transmettre à l'utilisateur U-n.

A l'étape 680-R, le message $\mathcal{M}_t$ est transmis via le module d'acquisition de message 1020.

L'homme du métier comprendra aisément que les étapes 640-R et 660-R peuvent être réalisées de manière simultanée et/ou selon un ordre différent, par exemple un ordre défini par le module de gestion 1040.

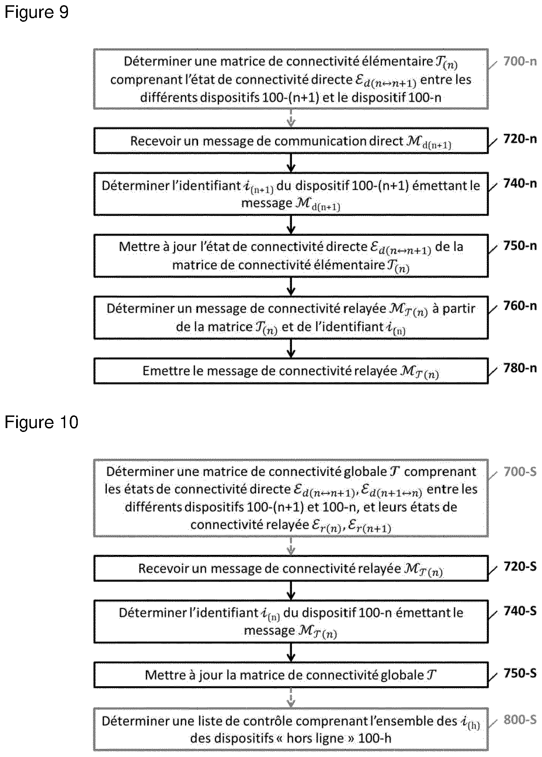

La figure 9 est un organigramme décrivant des sous-étapes du procédé de gestion de communication sans fil critique, mis en oeuvre par un dispositif de communication 100-n, pour la supervision de la liaison de communication sans fil directe 110-n(n+1) avec les autres dispositifs de communication 100-(n+1) du système 10, selon des modes de réalisation de l'invention.

A l'étape 700-n, qui peut être une étape d'initialisation du dispositif de communication 100-n par exemple, la matrice de connectivité élémentaire $\mathcal{T}_{(n)}$ est déterminée à partir de la matrice de connectivité relayée $\mathcal{T}_r$ et de l'ensemble des états de connectivité directe $\varepsilon_{d(n\leftrightarrow n+1)}$ entre les dispositifs 100-(n+1) et le dispositif 100-n.

A l'étape 720-n, un message de communication directe $\mathcal{M}_{d(n+1)}$ émis par un dispositif de communication 100-(n+1) est reçu par le dispositif de communication 100-n, par l'intermédiaire du mode de communication directe par le module de communication directe 1060.

A l'étape 740-n, l'identifiant $i_{d(n+1)}$ du dispositif de communication 100-(n+1) est déterminé à partir de données d'identification du message reçu $\mathcal{M}_{d(n+1)}$.

A l'étape 750-n, l'état de connectivité directe $\varepsilon_{d(n\leftrightarrow n+1)}$ entre le dispositif 100-(n+1) et le dispositif 100-n est mis à jour dans la matrice de connectivité élémentaire $\mathcal{T}_{(n)}$.

A l'étape 760-n, le message de connectivité relayée $\mathcal{M}_{\mathcal{T}(n)}$ est déterminé à partir de la matrice de connectivité élémentaire $\mathcal{T}_{(n)}$ et de l'identifiant unique $i_{(n)}$ du dispositif 100-n.

A l'étape 780-n, le message de connectivité relayée $\mathcal{M}_{\mathcal{T}(n)}$ est émis par l'intermédiaire du mode de communication directe par le module de communication directe 1060 du dispositif 100-n.

L'homme du métier comprendra aisément que les étapes 740-n, 750-n, et 760-n peuvent être réalisées de manière simultanée et/ou selon un ordre différent, par exemple un ordre défini par le module de gestion 1040.

La figure 10 est un organigramme décrivant des sous-étapes du procédé de gestion de communication sans fil critique, mis en oeuvre par un équipement de supervision 400, pour la supervision des connexions au réseau 200 des différents dispositifs de communication 100-n et 100-(n+1) du système 10 et de leurs états de connectivité directe entre eux, selon des modes de réalisation de l'invention.

A l'étape 700-S, qui peut être une étape d'initialisation de l'équipement de supervision 400 par exemple, la matrice de connectivité globale $\mathcal{T}$ est déterminée à partir des connexions au réseau 200 des différents dispositifs de communication 100-n et 100-(n+1) du système 10, et de l'ensemble des états de connectivité directe ($\varepsilon_{d(n\leftrightarrow n+1)}$ et $\varepsilon_{d(n+1\leftrightarrow n)}$) entre les dispositifs 100-(n+1) et le dispositif 100-n.

A l'étape 720-S, un message de connectivité relayée $\mathcal{M}_{\mathcal{T}(n)}$ émis par un dispositif de communication 100-n est reçu par l'équipement de supervision 400, par l'intermédiaire du mode de communication relayée.

A l'étape 740-S, l'identifiant $i_{(n)}$ du dispositif de communication 100-n est déterminé à partir de données d'identification du message reçu $\mathcal{M}_{\mathcal{T}(n)}$.

A l'étape 750-S, la matrice de connectivité globale T est mise à jour.

A l'étape 800-S, qui peut également être une étape d'initialisation de l'équipement de supervision 400 par exemple, la liste de contrôle comprenant l'identifiant unique $i_{(h)}$ de l'ensemble des dispositifs « hors ligne » 100-h est déterminée.

L'homme du métier comprendra aisément que les étapes 720-S, 740-S, 750-S, et 800-S peuvent être réalisées de manière simultanée et/ou selon un ordre différent, par exemple un ordre défini par l'équipement de supervision 400.

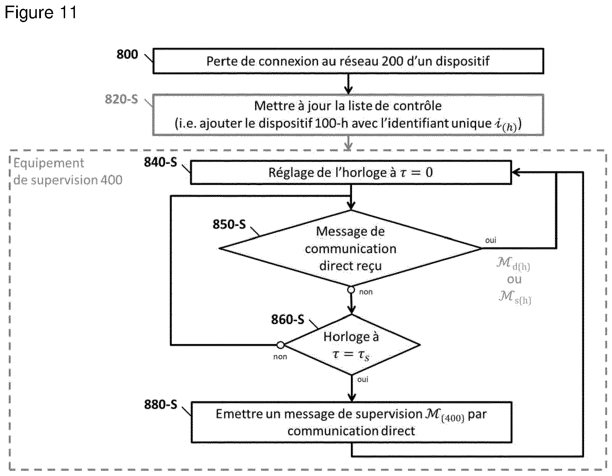

La figure 11 est un organigramme décrivant des sous-étapes du procédé de gestion de communication sans fil critique, mis en oeuvre par un équipement de supervision 400, pour la supervision des états de connectivité directe entre les différents dispositifs de communication 100-n et 100-(n+1) du système 10, selon des modes de réalisation de l'invention.

A l'étape 800, un dispositif de communication 100-n est déconnecté du réseau 200.

A l'étape 820-S, la liste de contrôle comprenant l'identifiant unique $i_{(h)}$ de l'ensemble des dispositifs « hors ligne » 100-h est mise à jour. Notamment, l'identifiant unique $i_{(n)}$ du dispositif 100-n déconnecté du réseau 200 à l'étape 800 est ajouté à la liste de contrôle.

A l'étape 840-S, une horloge de supervision de l'équipement de supervision 400 (par exemple liée à la supervision du dispositif 100-n déconnecté du réseau 200 à l'étape 800) est mise à 0 ($\tau$ = 0) et activée. Dans des modes de réalisation, la valeur de l'horloge de supervision peut également être fixée en fonction d'une ou plusieurs valeurs associées à un ou plusieurs horodatages $t_{(n+1)}$ relatifs aux différents états de connectivité direct $\varepsilon_{d(h \leftrightarrow n+1)}$ et/ou des horodatages $t_{\mathcal{T}(n)}$ relatifs aux matrices de connectivité élémentaires $\mathcal{T}_{(n)}$ reçues.

A l'étape 860-S, si la valeur de l'horloge de supervision atteint la valeur de la fréquence de temps de supervision $\tau = \tau_s$ alors le message de supervision $\mathcal{M}_{(400)}$ est déterminé à partir des identifiants de la liste de contrôle, puis émis par l'intermédiaire du mode de communication directe à l'étape 880-S.

A l'étape 850-S, si un message de communication direct quelconque (i.e. $\mathcal{M}_{d(n)}$ ou $\mathcal{M}_{s(n)}$), émis par le dispositif 100-n déconnecté du réseau 200 à l'étape 800, est reçu par l'équipement de supervision 400, par l'intermédiaire du mode de communication directe, avant que l'horloge de supervision liée à la supervision de ce dispositif 100-n, n'atteigne une valeur de fréquence de temps de supervision $\tau < \tau_s$, alors la valeur de cette horloge de supervision est remise à 0 et réactivée.

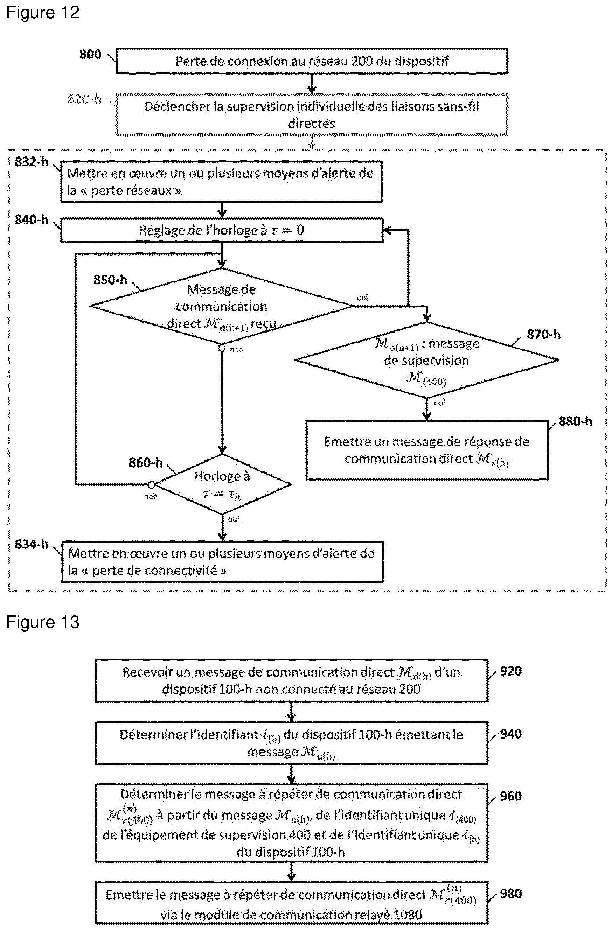

La figure 12 est un organigramme décrivant des sous-étapes du procédé de gestion de communication sans fil critique, mis en oeuvre par un dispositif de communication « hors ligne » 100-h déconnecté du réseau 200 à l'étape 800, pour la supervision de ses états de connectivité directe avec les autres dispositifs de communication 100-(n+1) du système 10, selon des modes de réalisation de l'invention.

A l'étape 820-h, le mode de supervision individuelle des liaisons sans-fil directes est déclenché.

A l'étape 832-h, un ou plusieurs moyens d'alerte de perte de réseau sont mis en oeuvre pour notifier une perte de réseau.

A l'étape 840-h, la valeur de l'horloge de supervision du dispositif de communication « hors ligne » 100-h, est mise à 0 ($\tau$ = 0) et activée. Selon des modes de réalisation, l'horloge de supervision peut également être initialisée en fonction d'une ou plusieurs valeurs associées à un ou plusieurs horodatages $t_{(n+1)}$ relatifs aux différentes états de connectivité directe $\varepsilon_{d(h \leftrightarrow n+1)}$.

A l'étape 860-h, si la valeur de l'horloge de supervision atteint une valeur de seuil de temps de supervision $\tau = \tau_h$ alors un ou plusieurs moyens d'alerte de perte de connectivité sont mis en oeuvre à l'étape 834-h pour notifier une perte de connectivité.

A l'étape 850-h, si un message de communication directe quelconque (par exemple $\mathcal{M}_{d(n+1)}$ émis par un autre dispositif 100-(n+1)) est reçu par le dispositif « hors ligne » 100-h, avant que la valeur d'horloge de supervision n'atteigne une valeur de seuil de temps de supervision $\tau < \tau_h$, alors cette horloge de supervision est remise à 0 et réactivée.

A l'étape 870-h, si le message de communication directe reçu à l'étape 850-h est un message de supervision $\mathcal{M}_{(400)}$, alors le message de réponse de communication directe $\mathcal{M}_{s(h)}$ est déterminé à partir du $\mathcal{M}_{(400)}$ et de l'identifiant $i_{(h)}$ du dispositif « hors ligne » 100-h, puis émis par l'intermédiaire du mode de communication directe à l'étape 880-h.

La figure 13 est un organigramme selon des modes de réalisation de l'invention décrivant de sous-étapes du procédé de gestion de communication sans fil critique pour la réception et l'émission d'un message, mis en oeuvre par un dispositif de communication 100-n.

A l'étape 920, un message de communication directe émis par un dispositif de communication (par exemple un message $\mathcal{M}_{d(h)}$ émis un dispositif « hors ligne » 100-h) est reçu par un équipement de supervision 400 étant un dispositif de communication 100-n, via le mode de communication directe par le module de communication directe 1060.

A l'étape 940, l'identifiant $i_{(h)}$ du dispositif de communication 100-h est déterminé à partir de données d'identification du message reçu $\mathcal{M}_{d(h)}$ par le dispositif de communication 100-n.

A l'étape 960, le message à répéter de communication relayée $\mathcal{M}_{r(400)}^{(h)}$ est déterminé, par l'équipement de supervision 400, à partir du message reçu de communication directe $\mathcal{M}_{d(h)}$ transmis par le dispositif 100-h, de l'identifiant unique $i_{(n)}$ (ou $i_{(400)}$) du dispositif 100-n associé à l'équipement de supervision 400 et de l'identifiant unique $i_{(h)}$ associé au dispositif 100-h.

A l'étape 980, le message à répéter de communication relayée $\mathcal{M}_{r(400)}^{(n)}$ est transmis via le mode de communication relayée par le module de communication relayée 1080 de l'équipement de supervision 400.

L'homme du métier comprendra que les dispositifs de communication, selon les modes de réalisation de l'invention, peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. Le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée aux différents modules de gestion, de communication relayée et/ou de communication directe, décrits à titre d'exemples non limitatifs.

## Revendications

1. Système de communication sans fil critique (10) comprenant un ensemble d'au moins deux dispositifs de communication (100), **caractérisé en ce que** chaque dispositif de communication (100-n) est associé à un identifiant unique $i_{(n)}$ et comprend un module de communication directe (1060) fonctionnant selon un protocole de communication directe et une horloge interne, ledit module de communication directe (1060) d'un dispositif de communication étant configuré pour recevoir un ou plusieurs messages identifiés de communication directe $\mathcal{M}_{d(n+1)}$ transmis par un ou plusieurs autres dispositifs de communication (100-(n+1)) dudit ensemble de dispositifs de communication, dits dispositifs émetteur, un dispositif de communication (100-n) étant configuré pour déterminer l'identifiant unique $i_{(n+1)}$ relatif à chacun desdits dispositifs émetteurs (100-(n+1)) à partir dudit message identifié de communication directe $\mathcal{M}_{d(n+1)}$ reçu, et pour déterminer un état de connectivité direct $\varepsilon_{d(n\to n+1)}$ correspondant à un état de liaison de communication sans fil directe de chacun desdits dispositifs émetteur (100-(n+1)) avec ledit dispositif de communication (100-n),
et **en ce que** le dispositif de communication (100-n) est configuré pour déterminer une matrice de connectivité élémentaire $\mathcal{T}_{(n)}$ comprenant l'état de connectivité direct $\varepsilon_{d(n\leftrightarrow n+1)}$ associé à l'identifiant

unique $i_{(n+1)}$ de chaque dispositif émetteur (100-(n+1)), ledit état de connectivité direct $\varepsilon_{d(n\leftrightarrow n+1)}$ étant mis à jour en l'absence de la réception d'un message identifié de communication directe $\mathcal{M}_{d(n+1)}$ émis par le dispositif (100-(n+1)) à un instant t déterminé par ladite horloge interne et défini par rapport à un seuil de surveillance de communication $\tau_c$.

2. Système de communication sans fil critique (10), selon la revendication 1, dans lequel le système comprend en outre une infrastructure réseau configurée pour mettre en oeuvre un réseau d'interconnexion (200), chaque dispositif de communication (100-n) comprenant un module de communication relayée (1080) fonctionnant selon un protocole de communication relayée, c'est-à-dire avec connexion à une infrastructure réseau via ledit réseau d'interconnexion (200), et dans lequel chaque dispositif de communication (100-n) est configuré pour déterminer un message de connectivité relayée $\mathcal{M}_{\mathcal{T}(n)}$ comprenant ladite matrice de connectivité élémentaire $\mathcal{T}_{(n)}$, ledit module de communication relayée (1080) de chaque dispositif de communication (100-n) étant configuré pour émettre ledit message de connectivité relayée $\mathcal{M}_{\mathcal{T}(n)}$ si ledit dispositif de communication (100-n) est connecté audit réseau d'interconnexion (200), en fonction de paramètres de répétition prédéfinis.

3. Système de communication sans fil critique (10), selon la revendication 2, dans lequel le système comprend en outre un centre de communication (210) relié audit réseau d'interconnexion (200) et au moins un équipement de supervision (400), l'équipement de supervision (400) étant le centre de communication (210) et/ou un dispositif de communication (100) du système (10) connecté audit réseau d'interconnexion (200), et dans lequel l'équipement de supervision (400) est configuré pour recevoir au travers du réseau d'interconnexion (200) ledit message de connectivité relayé $\mathcal{M}_{\mathcal{T}(n)}$ envoyé par chacun des dispositifs de communication (100-n) connectés audit réseau d'interconnexion (200), l'équipement de supervision (400) étant en outre configuré pour déterminer une matrice de connectivité globale $\mathcal{T}$ mise à jour à partir des matrices de connectivité élémentaires $\mathcal{T}_{(n)}$ comprises dans les messages de connectivité relayés $\mathcal{M}_{\mathcal{T}(n)}$ reçus par l'équipe-

ment de supervision (400).

**4.** Système de communication sans fil critique (10), selon la revendication 3, dans lequel l'équipement de supervision (400) est un dispositif de communication et est configuré pour déterminer une liste de contrôle comprenant au moins un dispositif de communication (100-h) du système (10), l'équipement de supervision (400) étant en outre configuré pour déterminer un message de supervision $\mathcal{M}_{(400)}$, les dispositifs de communication (100-h) de la liste de contrôle étant non connectés audit réseau d'interconnexion (200), ladite liste de contrôle étant déterminée à partir de ladite matrice de connectivité globale T, le module de communication directe (1060) dudit équipement de supervision (400) étant configuré pour émettre ledit message de supervision $\mathcal{M}_{(400)}$ de manière répétée selon une fréquence de temps de supervision $\tau_s$ prédéfinie.

**5.** Système de communication sans fil critique (10), selon la revendication 4, dans lequel ladite liste de contrôle et ledit message de supervision $\mathcal{M}_{(400)}$ sont mis à jour si ledit équipement de supervision (400) reçoit un message identifié de communication directe $\mathcal{M}_{d(h)}$ en provenance d'un desdits dispositifs de communication (100-h) de ladite liste de contrôle et/ou si l'état de connectivité relayée $\varepsilon_{r(h)}$ d'un des dispositifs de communication (100-h) dans ladite matrice de connectivité globale $\mathcal{T}$ est modifié.

**6.** Système de communication sans fil critique (10), selon la revendication 5, dans lequel ladite liste de contrôle comprend $\mathcal{H}$ dispositifs de communication (100-h), ledit message de supervision $\mathcal{M}_{(400)}$ étant déterminé à partir de l'identifiant unique $i_{(h)}$ de chacun desdits $\mathcal{H}$ dispositifs de communication (100-h) de la liste de contrôle, chaque identifiant unique $i_{(h)}$ étant associé dans ledit message de supervision $\mathcal{M}_{(400)}$ à un indice de réponse $h$ compris entre 1 et $\mathcal{H}$.

**7.** Système de communication sans fil critique (10), selon l'une des revendications 1 à 6, dans lequel chaque dispositif de communication (100-n) comprend une horloge de supervision et est configuré pour activer un mode de supervision individuelle, en réponse à la déconnexion dudit dispositif de communication (100-n) dudit réseau d'interconnexion (200), le dispositif de communication (100-n) étant configuré pour effectuer, en réponse à l'activation dudit mode de supervision individuelle, une première initialisation de l'horloge de supervision à 0 et un déclenchement d'une alerte de la perte dudit réseau d'interconnexion (200), puis :

- une réinitialisation de l'horloge de supervision à 0, si le module de communication directe (1060) dudit dispositif de communication (100-n) reçoit un message identifié de communication directe $\mathcal{M}_{d(n+1)}$ en provenance d'un autre dispositif (100-(n+1)) dudit ensemble d'au moins deux dispositifs de communication (100),
- un déclenchement d'une alerte de perte de toutes connexions, pendant ledit mode de supervision individuelle si l'horloge de supervision dépasse un seuil de temps de supervision $\tau_h$ prédéfini, tel que $\tau \geq \tau_h$.

**8.** Système de communication sans fil critique (10), selon l'une des revendications 4 à 7, dans lequel chaque dispositif de communication (100-n) comprend une horloge de supervision et est configuré pour activer un mode de supervision individuelle, en réponse à la déconnexion dudit dispositif de communication (100-n) dudit réseau d'interconnexion (200), le dispositif de communication (100-n) étant configuré pour effectuer, en réponse à l'activation dudit mode de supervision individuelle une initialisation de l'horloge de supervision à 0, si le module de communication directe (1060) dudit dispositif de communication (100-n) reçoit un message de supervision $\mathcal{M}_{(400)}$ transmis par ledit équipement de supervision (400), ledit module de communication directe (1060) dudit dispositif de communication (100-n) étant configuré pour émettre un message réponse en communication directe $\mathcal{M}_{s(n)}$ en réponse au message de supervision $\mathcal{M}_{(400)}$ reçu.

**9.** Système de communication sans fil critique (10), selon la revendication 6 et l'une des revendications 7 et 8, dans lequel le dispositif de communication (100-n) est configuré pour déterminer l'indice de réponse $h$ associé à l'identifiant unique $i_{(n)}$ dudit dispositif de communication (100-n) à partir dudit message de supervision $\mathcal{M}_{(400)}$, le dispositif de communication (100-n) étant configuré pour transmettre ledit message réponse en communication directe

$\mathcal{M}_{s(n)}$ à émettre audit module de communication directe (1060) après une durée de contrôle $t_c$ défini à partir d'une durée initiale $\tau_i$ donnée, la durée de contrôle $t_c$ étant définie par $t_c = (h - 1) \times \tau_i$.

10. Système de communication sans fil critique (10), selon l'une des revendications 8 ou 9, dans lequel chaque dispositif de communication (100-n) comprend une unité de géolocalisation (1048) fournissant des données de géolocalisation dudit dispositif de communication (100-n), et dans lequel ledit message réponse en communication directe $\mathcal{M}_{s(n)}$ comprend au moins une partie au moins desdites données de géolocalisation dudit dispositif de communication (100-n).

11. Procédé de gestion de communication sans fil critique, mis en oeuvre dans un système comprenant un ensemble d'au moins deux dispositifs de communication (100) et une infrastructure réseau configurée pour mettre en oeuvre un réseau d'interconnexion (200), chaque dispositif de communication (100-n) est associé à un identifiant unique $i_{(n)}$ et comprend un module de communication directe (1060) fonctionnant selon un protocole de communication directe, une horloge interne et un module de communication relayée (1080) fonctionnant selon un protocole de communication relayée, c'est-à-dire avec connexion à une infrastructure réseau via ledit réseau d'interconnexion (200), **caractérisé en ce que** le procédé comprend les étapes consistant à :

- recevoir via ledit module de communication directe (1060) d'un dispositif de communication (100-n) un message identifié de communication directe $\mathcal{M}_{d(n+1)}$ transmis par un autre dispositif de communication (100-(n+1)) dudit ensemble de dispositifs de communication (100), dit dispositif émetteur,

- déterminer l'identifiant unique $i_{(n+1)}$ relatif audit dispositif émetteur (100-(n+1)) à partir dudit message identifié de communication directe $\mathcal{M}_{d(n+1)}$ reçu,
- déterminer un état de connectivité direct $\varepsilon_{d(n\leftrightarrow n+1)}$ correspondant à un état de liaison de communication sans fil directe dudit dispositif émetteur (100-(n+1)) avec ledit dispositif de communication (100-n),
- déterminer une matrice de connectivité élémentaire $\mathcal{T}_{(n)}$ à partir de l'état de connectivité

direct $\varepsilon_{d(n\leftrightarrow n+1)}$) associé audit identifiant unique $i_{(n+1)}$ de chaque dispositif émetteur (100-(n+1)),
- déterminer un message de connectivité relayée $\mathcal{M}_{\mathcal{T}(n)}$ comprenant ladite matrice de connectivité élémentaire $\mathcal{T}_{(n)}$, et
- émettre ledit message de connectivité relayée $\mathcal{M}_{\mathcal{T}(n)}$ si ledit dispositif de communication (100-n) est connecté audit réseau d'interconnexion (200),

et **en ce que** le procédé comprend en outre les étapes consistant à :

- mettre à jour ledit état de connectivité direct $\varepsilon_{d(n\leftrightarrow n+1)}$ en l'absence de la réception d'un message identifié de communication directe $\mathcal{M}_{d(n+1)}$ émis par le dispositif (100-(n+1)) à un instant t déterminé par ladite horloge interne et défini par rapport à un seuil de surveillance de communication $\tau_c$,

- déterminer une matrice de connectivité globale $\mathcal{T}$ dudit ensemble d'au moins deux dispositifs de communication (100) à partir de ladite matrice de connectivité élémentaire $\mathcal{T}_{(n)}$ de chaque dispositif de communication (100-n) dudit ensemble,
- déterminer à partir de ladite matrice de connectivité globale $\mathcal{T}$ une liste de contrôle comprenant au moins un dispositif de communication (100-h) du système (10), les dispositifs de communication (100-h) de la liste de contrôle étant non connectés audit réseau d'interconnexion (200),

déterminer un message de supervision $\mathcal{M}_{(400)}$ à partir de ladite liste de contrôle, émettre ledit message de supervision $\mathcal{M}_{(400)}$ de manière répété selon une fréquence de temps de supervision $\tau_s$ prédéfinie.

Figure 1

Figure 2

Figure 3

100-n

1020

1040

1042

1044

1046

1048

1080

1060

Figure 4

| Matrice de connectivité élémentaire $\mathcal{T}_{(n)}$ | | |
|---|---|---|
| Mode de communication | Direct | Relayée |
| $i_{(n)}$ | - | $\varepsilon_{r(n)}$ |
| $i_{(n+1)}$ | $\varepsilon_{d(n \leftrightarrow n+1)}$ | $\varepsilon_{r(n+1)}$ |
| $i_{(n+2)}$ | $\varepsilon_{d(n \leftrightarrow n+2)}$ | $\varepsilon_{r(n+2)}$ |
| $i_{(n+3)}$ | $\varepsilon_{d(n \leftrightarrow n+3)}$ | $\varepsilon_{r(n+3)}$ |

Figure 5

**Matrice de connectivité globale**
$$\mathcal{T}$$

| Connexions | $i_{(n)}$ | $i_{(n+1)}$ | $i_{(n+2)}$ | $i_{(n+3)}$ |
|---|---|---|---|---|
| $i_{(n)}$ | $\varepsilon_{r(n)}$ | $\varepsilon_{d(n+1\leftrightarrow n)}$ | $\varepsilon_{d(n+2\leftrightarrow n)}$ | $\varepsilon_{d(n+3\leftrightarrow n)}$ |
| $i_{(n+1)}$ | $\varepsilon_{d(n\leftrightarrow n+1)}$ | $\varepsilon_{r(n+1)}$ | $\varepsilon_{d(n+2\leftrightarrow n+1)}$ | $\varepsilon_{d(n+3\leftrightarrow n+11)}$ |
| $i_{(n+2)}$ | $\varepsilon_{d(n\leftrightarrow n+2)}$ | $\varepsilon_{d(n+1\leftrightarrow n+2)}$ | $\varepsilon_{r(n+2)}$ | $\varepsilon_{d(n+3\leftrightarrow n+2)}$ |
| $i_{(n+3)}$ | $\varepsilon_{d(n\leftrightarrow n+3)}$ | $\varepsilon_{d(n+1\leftrightarrow n+3)}$ | $\varepsilon_{d(n+2\leftrightarrow n+3)}$ | $\varepsilon_{r(n+3)}$ |

Figure 6

**Message de supervision direct**
$$\mathcal{M}_{(400)}$$

| Identifiants des dispositifs « hors ligne » | indice |
|---|---|
| $i_{(h)}$ | $h = 1$ |
| $i_{(h+1)}$ | $h + 1$ |
| $i_{(h+2)}$ | $h + 2$ |
| $i_{(h+3)}$ | $h + 3$ |

Figure 7

Déterminer un identifiant $i_{d(n)}$ associé au module de communication direct à partir de l'identifiant unique $i_{r(n)}$ du module de communication relayé du dispositif 100-n — 600-E

Acquérir un message $\mathcal{M}_{0(n)}$ — 620-E

Convertir le message $\mathcal{M}_{0(n)}$ en un message de communication direct $\mathcal{M}_d$ et en un message de communication relayé $\mathcal{M}_{r(n)}$ — 640-E

Déterminer le message identifié de communication direct $\mathcal{M}_{d(n)}$ à partir du message de communication direct $\mathcal{M}_d$ et de l'identifiant déterminé $i_{d(n)}$ — 660-E

Emettre de façon synchrone le message identifié de communication direct $\mathcal{M}_{d(n)}$ et le message de communication relayé $\mathcal{M}_{r(n)}$ — 680-E

Figure 8

Recevoir un message de communication direct $\mathcal{M}_{d(n+1)}$ (ou un message de communication relayé $\mathcal{M}_{r(n+1)}$) — 620-R

Déterminer l'identifiant $i_{d(n+1)}$ (ou $i_{r(n+1)}$) du dispositif 100-(n+1) émettant le message $\mathcal{M}_{d(n+1)}$ (ou $\mathcal{M}_{r(n+1)}$) — 640-R

Convertir le message reçu $\mathcal{M}_{d(n+1)}$ (ou $\mathcal{M}_{r(n+1)}$) en un message $\mathcal{M}_t$ à transmettre — 660-R

Transmettre le message $\mathcal{M}_t$ associé au dispositif 100-(n+1) — 680-R

Figure 9

| Déterminer une matrice de connectivité élémentaire $\mathcal{T}_{(n)}$ comprenant l'état de connectivité directe $\mathcal{E}_{d(n \leftrightarrow n+1)}$ entre les différents dispositifs 100-(n+1) et le dispositif 100-n | 700-n |

| Recevoir un message de communication direct $\mathcal{M}_{d(n+1)}$ | **720-n** |

| Déterminer l'identifiant $i_{(n+1)}$ du dispositif 100-(n+1) émettant le message $\mathcal{M}_{d(n+1)}$ | **740-n** |

| Mettre à jour l'état de connectivité directe $\mathcal{E}_{d(n \leftrightarrow n+1)}$ de la matrice de connectivité élémentaire $\mathcal{T}_{(n)}$ | 750-n |

| Déterminer un message de connectivité relayée $\mathcal{M}_{\mathcal{T}(n)}$ à partir de la matrice $\mathcal{T}_{(n)}$ et de l'identifiant $i_{(n)}$ | 760-n |

| Emettre le message de connectivité relayée $\mathcal{M}_{\mathcal{T}(n)}$ | 780-n |

Figure 10

| Déterminer une matrice de connectivité globale $\mathcal{T}$ comprenant les états de connectivité directe $\mathcal{E}_{d(n \leftrightarrow n+1)}, \mathcal{E}_{d(n+1 \leftrightarrow n)}$ entre les différents dispositifs 100-(n+1) et 100-n, et leurs états de connectivité relayée $\mathcal{E}_{r(n)}, \mathcal{E}_{r(n+1)}$ | 700-S |

| Recevoir un message de connectivité relayée $\mathcal{M}_{\mathcal{T}(n)}$ | 720-S |

| Déterminer l'identifiant $i_{(n)}$ du dispositif 100-n émettant le message $\mathcal{M}_{\mathcal{T}(n)}$ | 740-S |

| Mettre à jour la matrice de connectivité globale $\mathcal{T}$ | 750-S |

| Déterminer une liste de contrôle comprenant l'ensemble des $i_{(h)}$ des dispositifs « hors ligne » 100-h | 800-S |

## Figure 11

**800** — Perte de connexion au réseau 200 d'un dispositif

**820-S** — Mettre à jour la liste de contrôle
(i.e. ajouter le dispositif 100-h avec l'identifiant unique $i_{(h)}$)

Équipement de supervision 400

**840-S** — Réglage de l'horloge à $\tau = 0$

**850-S** — Message de communication direct reçu — oui — $\mathcal{M}_{d(h)}$ ou $\mathcal{M}_{s(h)}$

non

**860-S** — Horloge à $\tau = \tau_s$ — non

oui

**880-S** — Emettre un message de supervision $\mathcal{M}_{(400)}$ par communication direct

Figure 12

$800$ — Perte de connexion au réseau 200 du dispositif

$820\text{-}h$ — Déclencher la supervision individuelle des liaisons sans-fil directes

$832\text{-}h$ — Mettre en œuvre un ou plusieurs moyens d'alerte de la « perte réseaux »

$840\text{-}h$ — Réglage de l'horloge à $\tau = 0$

$850\text{-}h$ — Message de communication direct $\mathcal{M}_{d(n+1)}$ reçu

oui

non

$870\text{-}h$ — $\mathcal{M}_{d(n+1)}$ : message de supervision $\mathcal{M}_{(400)}$

oui

$880\text{-}h$ — Emettre un message de réponse de communication direct $\mathcal{M}_{s(h)}$

$860\text{-}h$ — Horloge à $\tau = \tau_h$

non

oui

$834\text{-}h$ — Mettre en œuvre un ou plusieurs moyens d'alerte de la « perte de connectivité »

Figure 13

Recevoir un message de communication direct $\mathcal{M}_{d(h)}$ d'un dispositif 100-h non connecté au réseau 200 — $920$

Déterminer l'identifiant $i_{(h)}$ du dispositif 100-h émettant le message $\mathcal{M}_{d(h)}$ — $940$

Déterminer le message à répéter de communication direct $\mathcal{M}_{r(400)}^{(n)}$ à partir du message $\mathcal{M}_{d(h)}$, de l'identifiant unique $i_{(400)}$ de l'équipement de supervision 400 et de l'identifiant unique $i_{(h)}$ du dispositif 100-h — $960$

Emettre le message à répéter de communication direct $\mathcal{M}_{r(400)}^{(n)}$ via le module de communication relayé 1080 — $980$

| | Europäisches Patentamt European Patent Office Office européen des brevets | **RAPPORT DE RECHERCHE EUROPEENNE** | Numéro de la demande<br>**EP 23 19 5183** |
|---|---|---|---|

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (IPC) |
|---|---|---|---|
| Y | US 2004/260701 A1 (LEHIKOINEN JUHA [FI] ET AL) 23 décembre 2004 (2004-12-23)<br>* alinéa [0030] – alinéa [0048] *<br>* alinéa [0138] – alinéa [0162] *<br>* alinéa [0244] *<br>----- | 1-11 | INV.<br>H04W84/18 |
| Y | WO 2021/224089 A1 (SIGNIFY HOLDING BV [NL]) 11 novembre 2021 (2021-11-11)<br>* page 2 – page 9 *<br>* page 20 *<br>----- | 1-11 | |
| Y | ABOLFAZLE AKBARI ET AL: "Clustering Algorithms in Mobile Ad Hoc Networks", COMPUTER SCIENCES AND CONVERGENCE INFORMATION TECHNOLOGY, 2009. ICCIT '09. FOURTH INTERNATIONAL CONFERENCE ON, IEEE, PISCATAWAY, NJ, USA,<br>24 novembre 2009 (2009-11-24), pages 1509-1513, XP031594053,<br>ISBN: 978-1-4244-5244-6<br>* page 4 *<br>----- | 1-11 | |
| | | | DOMAINES TECHNIQUES RECHERCHES (IPC) |
| A | WO 2008/021146 A2 (SIEMENS CORP RES INC [US]; BEHRENDT MICHAEL [DE]; CHINDAPOL AIK [US]) 21 février 2008 (2008-02-21)<br>* alinéa [0081]; figures 4, 10 *<br>----- | 1-11 | H04W |
| A | WO 2016/073984 A2 (INTERDIGITAL PATENT HOLDINGS [US]) 12 mai 2016 (2016-05-12)<br>* alinéa [0278] *<br>----- | 1-11 | |

Le présent rapport a été établi pour toutes les revendications

| Lieu de la recherche | Date d'achèvement de la recherche | Examinateur |
|---|---|---|
| Munich | 16 janvier 2024 | Tessier, Serge |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**EP 4 336 959 A1**

## ANNEXE AU RAPPORT DE RECHERCHE EUROPEENNE
## RELATIF A LA DEMANDE DE BREVET EUROPEEN NO.

EP 23 19 5183

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-01-2024

| Document brevet cité au rapport de recherche | | Date de publication | Membre(s) de la famille de brevet(s) | | Date de publication |
|---|---|---|---|---|---|
| US 2004260701 | A1 | 23-12-2004 | EP 1494432 | A2 | 05-01-2005 |
| | | | US 2004260701 | A1 | 23-12-2004 |
| WO 2021224089 | A1 | 11-11-2021 | CN 115462125 | A | 09-12-2022 |
| | | | EP 4147490 | A1 | 15-03-2023 |
| | | | JP 2023515723 | A | 13-04-2023 |
| | | | US 2023180100 | A1 | 08-06-2023 |
| | | | WO 2021224089 | A1 | 11-11-2021 |
| WO 2008021146 | A2 | 21-02-2008 | US 2008123584 | A1 | 29-05-2008 |
| | | | WO 2008021146 | A2 | 21-02-2008 |
| WO 2016073984 | A2 | 12-05-2016 | CN 107211297 | A | 26-09-2017 |
| | | | EP 3216259 | A2 | 13-09-2017 |
| | | | RU 2017119653 | A | 07-12-2018 |
| | | | US 2018338276 | A1 | 22-11-2018 |
| | | | WO 2016073984 | A2 | 12-05-2016 |

EPO FORM P0460

Pour tout renseignement concernant cette annexe : voir Journal Officiel de l'Office européen des brevets, No.12/82

33